# EUROPEAN PATENT APPLICATION

(11) **EP 4 834 691 A1**
(43) Date of publication of application: **04.11.2026**
(21) Application number: 24918352.6
(22) Date of filing: 26.12.2024
(51) Int. Cl.: B60W 60/00, B60W 40/00, B60W 40/08, B60T 7/12

(54) **DRIVING ASSISTANCE METHOD AND APPARATUS AND VEHICLE**

(30) Priority: 15.01.2024 CN 202410057684
(71) Applicant: Yinwang Intelligent Technologies Co., Ltd., Shenzhen, Guangdong 518110 (CN)
(72) Inventor: WEI, Hailong, Shenzhen, Guangdong 518129 (CN); WANG, Qijun, Shenzhen, Guangdong 518129 (CN); WANG, Zechen, Shenzhen, Guangdong 518129 (CN); ZHANG, Renxie, Shenzhen, Guangdong 518129 (CN); QI, Renjie, Shenzhen, Guangdong 518129 (CN)
(74) Representative: Maiwald GmbH
(86) International application number: PCT/CN2024/142766
(87) International publication number: WO 2025/152744

(57) **Abstract**

A driving assistance method and apparatus (200) and a vehicle (100) are provided. The driving assistance method includes two main phases. In a first phase, a first accelerator misapplication assessment result is obtained based on at least first accelerator actuation information of the vehicle (100). In a second phase, second accelerator actuation information is obtained, and emergency braking is performed on the vehicle (100) with reference to the first accelerator misapplication assessment result and the re-obtained accelerator actuation information.

## Description

This application claims priority to Chinese Patent Application No. 202410057684.2, filed with the China National Intellectual Property Administration on January 15, 2024 and entitled "DRIVING ASSISTANCE METHOD AND APPARATUS AND VEHICLE", which is incorporated herein by reference in its entirety.

### TECHNICAL FIELD

This application relates to the field of self-driving technologies and intelligent vehicle technologies, and in particular, to a driving assistance method and apparatus and a vehicle.

### BACKGROUND

With the rapid development of economy and urban transportation, the vehicle population increases year by year. Vehicles bring both convenience and potential risks to people in travel. It is reported that rapid acceleration of a vehicle caused by an accelerator misapplication is a cause of some traffic accidents. For example, an accelerator pedal and a brake pedal are disposed relatively close to each other in the vehicle. Therefore, a driver may be prone to use the accelerator as a brake by mistake in case of a misoperation or an emergency, resulting in an accelerator misapplication. When the driver misapplies the accelerator, the vehicle accelerates rapidly and rushes forward, which causes great hidden danger to travel safety of people.

In some solutions, a sensor is used to collect pressure with which a driver actuates an accelerator pedal, and whether an accelerator misapplication occurs is determined based on whether the pressure reaches a threshold, and emergency braking is performed. However, since different drivers have different driving styles, determining based on a pressure threshold of the accelerator pedal has a high mis-determining rate, affecting use experience of the driver. For example, when the driver actuates the accelerator pedal heavily to accelerate rapidly, if such case is determined as a misapplication, driving experience and comfort of the driver are significantly reduced. For another example, when the driver uses the accelerator as a brake in an emergency, and actuation force intensity does not reach the pressure threshold, if such case is not determined as a misapplication, a traffic accident is likely to occur.

How to accurately determine an accelerator misapplication and reduce a probability of traffic accidents caused by accelerator misapplications without affecting driving experience of a driver is a hot issue that is being studied by persons skilled in the art.

### SUMMARY

This application provides a driving assistance method and apparatus and a vehicle, to accurately determine an accelerator misapplication, thereby reducing, without affecting driving experience of a driver, a probability of a traffic accident caused by an accelerator misapplication. When a vehicle is equipped with an automatic emergency braking (autonomous emergency braking, AEB) system, AEB triggering precision can be improved, and use experience of an AEB function can be improved.

According to a first aspect, this application provides a driving assistance method, including: obtaining a first accelerator misapplication assessment result based on at least first accelerator actuation information of a vehicle, obtaining second accelerator actuation information of the vehicle, and performing emergency braking on the vehicle based on the first accelerator misapplication assessment result and the second accelerator actuation information of the vehicle. The first accelerator misapplication assessment result indicates that it is preliminarily determined whether a driver misapplies an accelerator.

In this application, determining of an accelerator misapplication is divided into two phases: preliminary determining and secondary confirmation. In the first phase, whether the driver misapplies the accelerator is preliminarily determined based on at least the first accelerator actuation information, and in the preliminary determining process, whether the driver is suspected to misapply the accelerator can be detected. When the driver indeed misapplies the accelerator, the vehicle usually accelerates rapidly. When the driver is aware that the vehicle accelerates abnormally or is aware that the driver has misapplied the accelerator, actuation force intensity applied by the driver to the accelerator is highly likely to change. In this application, accelerator actuation information, that is, the second accelerator actuation information, may be re-obtained in the second phase. With reference to a preliminary assessment result (that is, the first accelerator misapplication assessment result) in the first phase and the second accelerator actuation information obtained in the second phase, it can be more accurately determined whether an accelerator misapplication occurs, to determine whether to perform emergency braking on the vehicle. In this way, through determining in the two phases, accuracy of determining a misapplication can be improved, and the vehicle can be braked in a timely manner when it is confirmed that a misapplication occurs, thereby reducing a probability of a traffic accident caused by an accelerator misapplication. However, when the driver performs normal rapid acceleration, even if it is preliminarily determined that a misapplication occurs, secondary confirmation of the misapplication is performed, so that a mis-determining rate can be reduced, thereby avoiding affecting a degree of driving freedom of the driver, and improving driving experience.

In a possible implementation of the first aspect, accelerator actuation information includes one or more pieces of the following information: a pedal opening, an actuation rate, actuation force intensity, or the like. The actuation rate indicates a rate at which the pedal opening changes. The first accelerator actuation information and the second accelerator actuation information may be accelerator actuation information at different moments (or in different cases). In some solutions, the second accelerator actuation information is obtained after a period of time in which the first accelerator actuation information is obtained.

In the foregoing implementation, a misapplication result is preliminarily determined or confirmed with reference to the pedal opening, the actuation rate, the actuation force intensity, or the like, so that accuracy of determining a misapplication can be improved, and use experience can be improved.

Optionally, when the accelerator actuation information includes the pedal opening, the accelerator actuation information may further include time information corresponding to the pedal opening. Optionally, the actuation force intensity may be described by using a force intensity level, for example, force intensity levels such as "light actuation", "medium actuation", or "heavy actuation".

For example, the first accelerator actuation information includes a first pedal opening and time information of the first pedal opening. For another example, the first accelerator actuation information includes a first pedal opening and a first actuation rate. For another example, the first accelerator actuation information includes first actuation force intensity.

For example, the second accelerator actuation information includes a second pedal opening and time information of the second pedal opening. For another example, the second accelerator actuation information includes a second pedal opening and a second actuation rate. For another example, the second accelerator actuation information includes second actuation force intensity.

In another possible implementation of the first aspect, before obtaining the second accelerator actuation information of the vehicle, the method further includes: performing an anti-misapplication operation when the first accelerator misapplication assessment result indicates that the driver misapplies the accelerator.

In the foregoing implementation, the anti-misapplication operation makes it easy for the driver to perceive occurrence of a misapplication, and it is more easily to trigger the driver to respond to an accelerator actuation event, thereby improving accuracy and determining efficiency of determining an accelerator misapplication.

For example, when the driver misapplies an accelerator pedal, performing the anti-misapplication operation can more intuitively enable the driver to perceive occurrence of a misapplication, so that the driver can change, in a timely manner, pressure output to the accelerator pedal, for example, releasing the accelerator pedal, for example, moving a foot toward a brake direction. In this way, determining duration of the misapplication confirmation phase can be shortened, and more time and a longer distance are provided for emergency braking, thereby reducing a probability of a traffic accident caused by an accelerator misapplication. However, when the driver performs normal rapid acceleration, the driver may ignore the anti-misapplication operation and normally actuates the accelerator, for example, the driver does not suddenly release the accelerator pedal, so that it is not easy to mis-determine accelerator misapplication, thereby improving driving experience of the driver.

In some implementations, the anti-misapplication operation does not lock the accelerator pedal, and can support the driver in deeply actuating and releasing the accelerator pedal, so that the driver can have a higher degree of driving freedom.

In another possible implementation of the first aspect, the anti-misapplication operation includes outputting an accelerator rebound control signal, where the accelerator rebound control signal is used to control the accelerator pedal to give an accelerator pedal rebound force (or referred to as an elastic force). Optionally, the accelerator rebound control signal indicates a controller related to the accelerator pedal to apply a force to a direction of releasing the accelerator pedal.

In the foregoing implementation, if the driver is in normal rapid acceleration, the driver overcomes greater resistance, which triggers the driver to use a greater actuation force intensity, to continue to maintain a pedal opening or increase a pedal opening. On the contrary, if the driver misapplies the pedal, when the pedal "feels relatively heavy", the driver is more likely to be aware of an accelerator misapplication with reference to current acceleration of the vehicle, thereby improving accuracy of secondary misapplication determining. In conclusion, the foregoing solution helps improve accuracy of determining whether the driver misapplies the pedal.

In another possible implementation of the first aspect, the anti-misapplication operation includes outputting driving prompt information, where the driving prompt information is used to prompt the driver that there is an accelerator misapplication. Through the driving prompt information, the driver can perceive occurrence of a misapplication in a timely manner, thereby improving accuracy and determining efficiency of determining an accelerator misapplication.

Optionally, the driving prompt information may be transferred to the driver through a sound reminder, a light reminder, an electrical reminder, a tactile reminder (for example, vibration), or the like. For example, the driving prompt information may be output to a human-machine interaction (human-machine interaction, HMI), for example, a text reminder or a voice reminder.

Optionally, the driving prompt information may be presented in front of a field of view of the driver, so that the driver obtains the driving prompt information without lowering a head or turning a head. For example, a head up display (head up display, HUD) is used to display or provide an alarm for an accelerator misapplication, a vehicle traveling route, a collision risk, a vehicle speed, a vehicle speed change direction, acceleration, and the like.

In another possible implementation of the first aspect, time corresponding to the second accelerator actuation information may be after first duration in which the anti-misapplication operation is performed. In other words, obtaining the second accelerator actuation information of the vehicle includes: obtaining the second accelerator actuation information that is after the first duration in which the vehicle performs the anti-misapplication operation. The first duration is predefined duration, for example, 500 milliseconds (ms); and/or, the first duration is greater than human reflection time.

In another possible implementation of the first aspect, performing emergency braking on the vehicle based on the first accelerator misapplication assessment result and the second accelerator actuation information of the vehicle includes: confirming, based on the first accelerator misapplication assessment result and the second accelerator actuation information of the vehicle, whether the driver misapplies the accelerator, and performing emergency braking on the vehicle when it is confirmed that the driver misapplies the accelerator.

In the foregoing implementation, it is confirmed, based on the preliminary determining result in the first phase and the accelerator actuation information obtained in the second phase, whether the driver misapplies the accelerator, and emergency braking is performed on the vehicle when it is confirmed that the driver misapplies the accelerator, thereby improving emergency braking precision and driving safety.

In another possible implementation of the first aspect, the first accelerator actuation information includes a first pedal opening, and the second accelerator actuation information includes a second pedal opening. In this case, whether the driver releases the accelerator may be confirmed based on the first pedal opening and the second pedal opening. Further, if the accelerator is released, it indicates that an accelerator actuation action just performed may be a misapplication, and in this case, emergency braking may be performed; or if the accelerator is not released, it indicates that the driver performs normal rapid acceleration, and emergency braking is not triggered.

In another possible implementation of the first aspect, whether the accelerator is released may be determined based on the accelerator pedal information separately collected in the preliminary determining phase and the secondary determining phase.

In a possible implementation, the method further includes: confirming, based on the first accelerator misapplication assessment result and the second accelerator actuation information of the vehicle, whether the driver misapplies the accelerator includes: when the first accelerator misapplication assessment result indicates that it is preliminarily determined that the driver misapplies the accelerator, and a difference between the first pedal opening and the second pedal opening is greater than or greater than or equal to a first threshold, confirming that the driver misapplies the accelerator. In the foregoing implementation, if the difference is greater than the first threshold, it indicates that there is an action of releasing the accelerator. In this case, it is confirmed that the driver misapplies the accelerator, and emergency braking is performed.

In another case, the method further includes: when the first accelerator misapplication assessment result indicates that it is preliminarily determined that the driver does not misapply the accelerator, or the difference between the first pedal opening and the second pedal opening is less than the first threshold, confirming that the driver does not misapply the accelerator.

It should be understood that, in some solutions, the second accelerator actuation information is collected when it is preliminarily determined that the driver misapplies the accelerator. In this case, the first accelerator misapplication result may be an implicit condition or a precondition. In this case, if the difference between the first pedal opening and the second pedal opening is greater than or greater than or equal to the first threshold, it is confirmed that the driver misapplies the accelerator. In another case, if the difference between the first pedal opening and the second pedal opening is less than the first threshold, it is confirmed that the driver does not misapply the accelerator.

In the foregoing implementation, the difference between the first pedal opening and the second pedal opening may be a signed value. When the first pedal opening is greater than the second pedal opening, the first pedal opening minus the second pedal opening is a positive number; or when the first pedal opening is less than the second pedal opening, the first pedal opening minus the second pedal opening is a negative number.

Alternatively, when the first accelerator misapplication assessment result indicates that it is preliminarily determined that the driver misapplies the accelerator, and the difference between the second pedal opening and the first pedal opening is less than or less than or equal to a third threshold, it is confirmed that the driver misapplies the accelerator; or when the first accelerator misapplication assessment result indicates that it is preliminarily determined that the driver misapplies the accelerator, and the difference between the second pedal opening and the first pedal opening is greater than the third threshold, it is confirmed that the driver does not misapply the accelerator.

In another possible implementation of the first aspect, during the secondary determining, accelerator pedal data collected during the preliminary determining may not be used. For example, it is directly determined that an accelerator pedal opening collected at the second time has decreased to a preset value.

In a possible implementation, the second accelerator actuation information includes a second pedal opening, and confirming, based on the first accelerator misapplication assessment result and the second accelerator actuation information of the vehicle, whether the driver misapplies the accelerator includes: when the first accelerator misapplication assessment result indicates that it is preliminarily determined that the driver misapplies the accelerator and the second pedal opening is less than a second threshold, confirming that the driver misapplies the accelerator.

In another case, when the first accelerator misapplication assessment result indicates that it is preliminarily determined that the driver does not misapply the accelerator or the second pedal opening is greater than the second threshold, it is confirmed that the driver does not misapply the accelerator.

Optionally, the first accelerator misapplication result may be an implicit condition or a precondition, that is, when the second pedal opening is less than the second threshold, it is confirmed that the driver misapplies the accelerator. In another case, when the second pedal opening is greater than the second threshold, it is confirmed that the driver does not misapply the accelerator.

In some schemes, emergency braking can be replaced with braking, including comfort braking, rapid braking, or the like.

In another possible implementation of the first aspect, performing emergency braking on the vehicle when it is confirmed that the driver misapplies the accelerator includes: performing emergency braking on the vehicle when the vehicle has a collision risk and it is confirmed that the driver misapplies the accelerator.

In the foregoing implementation, emergency braking is triggered when the vehicle has a collision risk, so as to reduce a possibility of occurrence of a traffic accident and protect personal and property safety of a user. In addition, triggering of emergency braking may be further avoided in a case of an open environment, a low passage difficulty, or a collision-free environment, to avoid excessive interference caused by automatic emergency braking to driving of a user, thereby ensuring driving freedom of human driving.

In another possible implementation of the first aspect, the method further includes: skipping triggering emergency braking on the vehicle when it is confirmed that the driver does not misapply the accelerator.

In another possible implementation of the first aspect, the method further includes: skipping triggering emergency braking on the vehicle when the vehicle has a collision risk and it is confirmed that the driver does not misapply accelerator. For example, an AEB function is in a suppressed state.

In another possible implementation of the first aspect, a current gear of the vehicle is a forward gear, that is, a current traveling direction of the vehicle is a forward form. For example, in a scenario in which the vehicle is started, the vehicle moves forward, or the like, this application can perform preliminary determining and secondary confirmation of an anti-misapplication, so as to perform braking when it is confirmed that a misapplication occurs, thereby reducing a probability of a traffic accident caused by an accelerator misapplication.

In another possible implementation of the first aspect, a current gear of the vehicle is a reverse gear, that is, a traveling direction of the vehicle is a backward direction. For example, in a scenario of shifting into the reverse gear from a parked state to start the vehicle, reversing the vehicle, or the like, this application can perform preliminary determining and secondary confirmation of an anti-misapplication, so as to perform braking when it is confirmed that a misapplication occurs, thereby reducing a probability of a traffic accident caused by an accelerator misapplication.

In another possible implementation of the first aspect, in the preliminary determining phase, in addition to the first accelerator actuation information, preliminary determining of a misapplication may be further performed with reference to other information. The other information herein includes perception information of the driver, driving environment data of the vehicle, or the like.

The perception information of the driver includes one or more of biometric feature information and voice information of the driver, assessment data obtained by processing the biometric feature information and/or the voice information, and the like. It may be understood that, when the driver misapplies a brake, the driver may be in a tense state or a panic state. Therefore, performing preliminary determining of a misapplication with reference to the perception information of the driver can improve accuracy of determining a misapplication.

The driving environment information of the vehicle includes one or more of static environment information and dynamic environment information that are around the vehicle, a motion status of the vehicle, or the like. Alternatively, the driving environment data of the vehicle includes assessment data obtained through calculation based on one or more pieces of the foregoing information such as the static environment information and the dynamic environment information that are around the vehicle, and the motion status of the vehicle itself, for example, collision risk information, passage path information, or risk avoidance path information.

In some solutions, the driving environment data indicates a collision risk degree of the vehicle. It may be understood that, when a passage difficulty is relatively high or a collision risk is high, there is also a relatively high probability that the driver misapplies the brake, and performing preliminary determining of a misapplication with reference to the driving environment information of the vehicle can improve accuracy of determining a misapplication.

In another possible implementation of the first aspect, obtaining the first accelerator misapplication assessment result based on at least the first accelerator actuation information of the vehicle includes: obtaining the first accelerator misapplication assessment result based on at least one of the first accelerator actuation information of the vehicle, perception information of the driver of the vehicle, and driving environment data of the vehicle.

For example, the first accelerator misapplication assessment result is obtained based on the first accelerator actuation information of the vehicle and the perception information of the driver of the vehicle.

For another example, the first accelerator misapplication assessment result is obtained based on the first accelerator actuation information of the vehicle and the driving environment data of the vehicle.

For another example, the first accelerator misapplication assessment result is obtained based on the first accelerator actuation information of the vehicle, the perception information of the driver of the vehicle, and the driving environment data of the vehicle.

In another possible implementation of the first aspect, the method further includes: determining the driving environment data based on surrounding environment information of the vehicle and a motion status of the vehicle. For example, the driving environment data includes a collision-free passage probability (collision-free passage probability, CFPP).

In another possible implementation of the first aspect, the motion status of the vehicle indicates an estimated passage path of the vehicle, and the surrounding environment information of the vehicle is used to obtain a passable path of the vehicle. The driving environment data indicates a collision risk degree of the vehicle, and the collision risk degree is related to a degree of consistency between the estimated passage path and the passable path of the vehicle. For example, if a steering direction of a steering wheel of the vehicle is consistent with the passable path, when a risk of collision between the vehicle and a surrounding environment and a traffic flow is estimated, a collision-free passage success rate of the vehicle is relatively high.

In another possible implementation of the first aspect, the perception information of the driver of the vehicle includes a focus degree of the driver. The method further includes: obtaining attention assessment data of the driver and tension degree assessment data of the driver, and determining the focus degree of the driver based on the attention assessment data of the driver and the tension degree assessment data of the driver.

During traveling of the vehicle, an accelerator misapplication is prone to occur when attention of the driver is distracted and the driver is tense. In the foregoing implementation, the focus degree of the driver is obtained with reference to the attention assessment data of the driver and the tension degree assessment data of the driver, and the focus degree of the driver is combined with a process of determining whether a misapplication occurs, so that accuracy of determining a misapplication can be improved.

Optionally, a weight of the attention assessment data is greater than a weight of the tension degree assessment data. For example, in some solutions, the tension degree assessment data of the driver may be obtained based on a voice in a cab. Considering that the driver or a passenger may not make a sound, when the weight of the attention assessment data is greater than the weight of the tension degree assessment data, accuracy of the focus degree can be improved.

In some solutions, a driver monitoring system (driver monitoring system, DMS) is deployed in the vehicle. The attention assessment data of the driver and/or the tension degree assessment data of the driver may be provided by the DMS, or the attention assessment data of the driver and/or the tension degree assessment data of the driver may be obtained by processing a picture and/or a voice provided by the DMS.

In another possible implementation of the first aspect, the method further includes: obtaining face recognition information of the driver, obtaining the attention assessment data based on the face recognition information of the driver, and obtaining voice information of the cab of the vehicle; and obtaining the tension degree assessment data based on the voice information of the cab of the vehicle. The obtaining herein includes collecting data or receiving data collected by another main device.

In another possible implementation of the first aspect, obtaining the first accelerator misapplication assessment result based on at least the first accelerator actuation information of the vehicle includes: determining a misapplication indicator based on the perception information of the driver of the vehicle and the driving environment data of the vehicle, determining first actuation force intensity based on the first accelerator actuation information, and determining the first accelerator misapplication assessment result based on the misapplication indicator and the first accelerator actuation force intensity.

For example, the misapplication indicator is determined based on two input parameters: the perception information of the driver of the vehicle and the driving environment data of the vehicle. Because reference is made to a collision risk degree and a response of the driver, the misapplication indicator can more accurately reflect a possibility that the driver misapplies the accelerator in cases of different collision risk degrees and different emotion feedbacks.

In some solutions, the two input parameters have different weight values, so that availability of the misapplication indicator is higher. For example, the perception information of the driver includes a focus degree of the driver, the driving environment data of the vehicle includes a CFPP, and a WeightSum of the misapplication indicator meets the following formula: $WeightSum = \left(1-CFPP\right) \times w 1 + DrivingFocusLevel \times w 2$

DrivingFocusLevel indicates the focus degree of the driver, and w1 and w2 are weight values. Further, w1 and w2 meet w1+w2=1. For example, w1 is 0.7, and w2 is 0.3. For example, "×" is used to represent an operator, and may alternatively be replaced with "*" in some solutions.

Optionally, a weight of the driving environment data of the vehicle is greater than that of the perception information of the driver of the vehicle. For example, w1 is greater than w2. Due to a personal emotion expression habit, emotion change degrees of some drivers may not be high. Therefore, increasing a proportion of the objective driving environment data helps quantify a misapplication possibility, thereby improving accuracy of determining a misapplication.

In another possible implementation of the first aspect, the first actuation force intensity is one of at least one actuation force intensity level, and the at least one actuation force intensity level indicates a degree of a weight with which the driver actuates the accelerator pedal. For example, the actuation force intensity level includes a first level, a second level, and a third level. For example, the first level, the second level, and the third level are respectively "heavy actuation", "medium actuation", and "light actuation".

In a possible implementation, when a pedal opening of the accelerator pedal falls within a first opening range and a rate at which the accelerator pedal is actuated falls within a first rate range, the accelerator actuation force intensity level is the first level. When the pedal opening of the accelerator pedal falls within a second opening range and the rate at which the accelerator pedal is actuated falls within a second rate range, the accelerator actuation force intensity level is the second level. In other cases, the accelerator actuation force intensity level is the third level. A lower bound of the first opening range is greater than a lower bound of the second opening range, and a lower bound of the first rate range is greater than a lower bound of the second rate range.

In another possible implementation of the first aspect, the perception information of the driver, the driving environment data of the vehicle, or the like may be used in a misapplication confirmation phase, to improve accuracy of confirming and determining a misapplication. For example, the method further includes: performing emergency braking on the vehicle based on the first accelerator misapplication assessment result, the second accelerator actuation information, the perception information of the driver, and/or the driving environment data of the vehicle.

In another possible implementation of the first aspect, the method is performed when duration in which the accelerator pedal is continuously actuated exceeds second duration. For example, when the duration in which the accelerator pedal is continuously actuated exceeds the second duration, the first accelerator misapplication assessment result is obtained based on at least the first accelerator actuation information of the vehicle.

According to a second aspect, this application provides a driving assistance apparatus. The driving assistance apparatus includes a processing unit and a communication unit. The driving assistance apparatus is configured to implement the method described in any one of the first aspect or the possible implementations of the first aspect. The processing unit is configured to implement the foregoing operations such as information processing, data generation, determining, decision making, and determining. The communication unit is configured to implement operations such as obtaining, outputting, and receiving.

According to a third aspect, this application provides a chip, including a processor and a communication interface. The communication interface is configured to output and/or output data (including an instruction), and/or the communication interface is configured to receive and/or send data. When the processor executes program instructions in a memory, the method described in any one of the first aspect or the possible implementations of the first aspect is implemented.

According to a fourth aspect, this application provides a computing device, including a processor and a memory. The memory is configured to store program instructions, and when the processor executes the program instructions in the memory, the method described in any one of the first aspect or the possible implementations of the first aspect is implemented.

According to a fifth aspect, this application provides a computer program product, including program instructions, or the intelligent driving program product including executable computer program code. When the computer program product is executed by at least one processor, the method described in any one of the first aspect or the possible implementations of the first aspect is implemented.

According to a sixth aspect, this application provides a vehicle, including an accelerator and a braking system. The vehicle is a vehicle in a broad sense, and may be a transportation means (for example, a commercial vehicle, a passenger vehicle, or a train, an industrial vehicle (for example, a forklift, a trailer, or a tractor), an engineering vehicle (for example, an excavator, a bulldozer, or a crane)), a robot, or the like.

Optionally, the vehicle is configured to implement the method described in any one of the first aspect or the possible implementations of the first aspect.

Alternatively, optionally, the vehicle further includes the driving assistance apparatus in the second aspect, or the vehicle further includes the chip in the third aspect, or the vehicle further includes the computing device in the fourth aspect, or the computer program product described in the fifth aspect is deployed in the vehicle.

According to a seventh aspect, this application provides a computer-readable storage medium. The computer-readable storage medium stores program instructions, and when the program instructions are executed by a processor, the method described in any one of the first aspect or the possible implementations of the first aspect is implemented.

### BRIEF DESCRIPTION OF DRAWINGS

The following briefly describes the accompanying drawings used in describing embodiments.
FIG. 1 is a diagram of a system architecture of a vehicle;
FIG. 2 is a diagram of a scenario in which a driver controls a vehicle;
FIG. 3 is a schematic flowchart of a driving assistance method according to an embodiment of this application;
FIG. 4A and FIG. 4B are diagrams of a pedal opening according to an embodiment of this application;
FIG. 5 is a diagram of a vehicle driving scenario;
FIG. 6 is a diagram of another vehicle driving scenario;
FIG. 7 is a diagram of a driving prompt according to an embodiment of this application;
FIG. 8 is a schematic flowchart of misapplication confirmation according to an embodiment of this application;
FIG. 9 is a diagram of another vehicle driving scenario;
FIG. 10 is a diagram of a structure of a driving assistance apparatus according to an embodiment of this application; and
FIG. 11 is a diagram of a structure of a computing device according to an embodiment of this application.

### DESCRIPTION OF EMBODIMENTS

Before embodiments of this application are described, terms that may be used in embodiments of this application are first described.
1. An obstacle is an entity, for example, an object, a terrain, or a facility, that may delay or hinder movement of a terminal during movement of the terminal. The object may include a living object or an inanimate object. In addition, a location of the obstacle may be fixed or moving.
2. AEB is an active vehicle safety technology that provides an alarm and performs automatic braking based on a distance between a vehicle and an obstacle.

The foregoing terms may be optionally applied in the following embodiments.

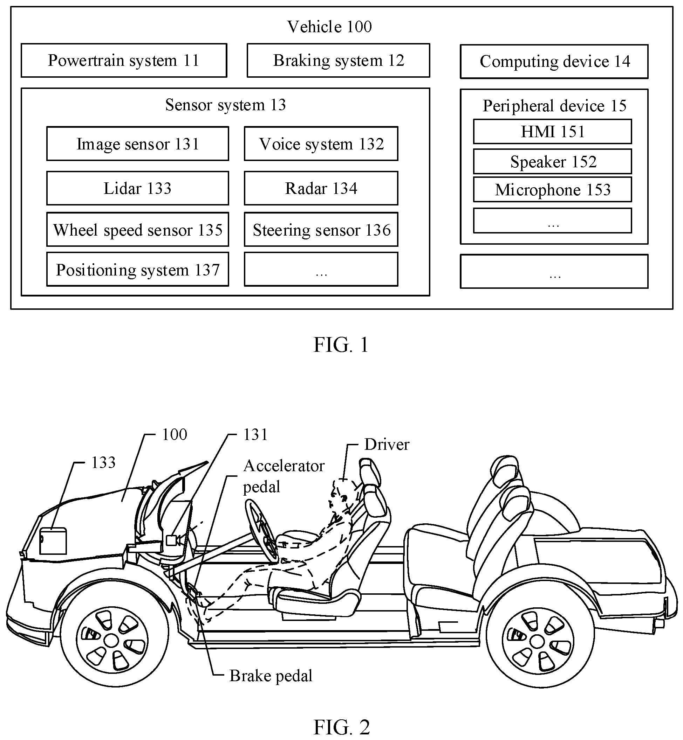

When driving a vehicle, a driver may misapply an accelerator pedal. For example, in a vehicle shown in FIG. 2, an accelerator pedal and a deceleration pedal are disposed relatively close to each other. In a case of a misoperation or an emergency, the driver may use the accelerator pedal as a brake pedal, causing the vehicle to accelerate rapidly and rush forward. In this case, whether the vehicle can accurately determine whether the behavior of actuating the accelerator pedal by the driver is a misapplication is directly related to driving experience of the driver and personal and property safety of the driver and a passenger. Some current solutions have a relatively high rate of mis-determining an accelerator misapplication, which not only affects use experience of a user, but also makes it difficult to effectively avoid occurrence of a traffic accident. In view of this, this application provides a driving assistance method and a related apparatus, to accurately determine an accelerator misapplication, thereby reducing, without affecting driving experience of a driver, a probability of a traffic accident caused by an accelerator misapplication. When a vehicle is equipped with an AEB system, AEB triggering precision can be improved, and use experience of an AEB function can be improved.

The following first describes a vehicle to which this application may be applied and a use scenario of this application.

Referring to FIG. 1 and FIG. 2, FIG. 1 is a diagram of a system architecture of a vehicle, and FIG. 2 is a diagram of a scenario in which a driver controls a vehicle. As shown in FIG. 1 and FIG. 2, a vehicle 100 may include a powertrain system 11 and a braking system 12, and optionally, further includes a sensor system 13, a computing device 14, a peripheral device 15, or the like.

The powertrain system 11 provides power for the vehicle 100, for example, includes one or more of an engine, a power battery, and the like. The powertrain system 11 includes an accelerator, and the accelerator includes an accelerator pedal. The accelerator pedal is usually set to be movable under a force. As shown in FIG. 2, the driver can actuate or release the accelerator pedal, so that the accelerator pedal is opened or retracted by a specific angle, and a traveling speed of the vehicle 100 is controlled.

The braking system 12 may represent a system used to reduce the traveling speed of the vehicle 100, may also be referred to as a braking system, and may include but is not limited to a brake controller, a decelerator, any other structural device configured to decelerate the vehicle. In some solutions, the braking system 12 may use friction to slow down movement of a vehicle tire, and further reduce the traveling speed of the vehicle. The braking system 12 of some vehicles includes a brake pedal, and the brake pedal is usually set to be movable under a force. For example, the driver can actuate or release the brake pedal, so that the traveling speed of the vehicle 100 is controlled.

The sensor system 13 may include several detection apparatuses (or referred to as detection devices), and the detection apparatuses can measure information, and convert measured information into an electrical signal or information in another required form according to a specific rule for output. As shown in FIG. 1, the sensor system 13 of the vehicle 100 includes one or more of the following detection apparatuses: an image sensor 131, a voice system 132, a lidar 133, a radar 134, a wheel speed sensor 135, a steering sensor 136, a positioning system 137, or the like. The following describes some of the detection apparatuses as examples.

The image sensor 131 is configured to shoot an image, for example, an image and a video. In some specific implementations, the image shooting apparatus includes but is not limited to a dashboard camera, a camera lens, a camera, another element used for photo/video shooting, or the like. Optionally, the image sensor 131 may be disposed to shoot an image of the outside of the vehicle, to obtain surrounding environment information of the vehicle. Alternatively, optionally, the image sensor 131 may be disposed to shoot an image of the inside of the vehicle, for example, shoot an image of the driver or an image of a cockpit. For example, a driver monitoring system (driver monitoring system, DMS) is deployed in the vehicle, and the DMS system includes the image sensor 131. As shown in FIG. 2, the image sensor 131 may be disposed at a location facing the driver, and after being enabled, the image sensor 131 may continuously collect, in a timely manner, images facing the driver. For another example, a cockpit monitoring system (cockpit monitoring system, CMS) is deployed in the vehicle, and an image in the cockpit can be collected. Certainly, in a specific implementation, the vehicle alternatively includes a plurality of image sensors 131, and the image of the inside of the vehicle and the image of the outside of the vehicle are shot simultaneously.

The voice system 132 is configured to collect sound information. For example, the voice system may include a microphone 153 or be connected to the microphone 153. In some solutions, the voice system 132 further includes a speaker 152, and the speaker 152 is configured to emit a sound. Further, the voice system may interact with a user, for example, receiving a voice input by the user (for example, collecting a voice in the cockpit), and/or inputting a voice prompt to the user, to perform voice interaction with the user. In some solutions, the voice system 132 may be configured to collect a voice in the cockpit.

The lidar 133 and the radar 134 are apparatuses that perform detection by using an electromagnetic wave (including light). The lidar 133 and the radar 134 may obtain related information of a target in physical space by transmitting a signal and receiving an echo, and the information includes one or more of a distance (or depth), an angle, a speed, a reflectivity, a color, and the like of the target. For example, with reference to FIG. 2, the lidar 133 may be disposed facing outside the vehicle, to detect a target around the vehicle. In some solutions, the lidar 133 and the radar 134 may be configured to detect the surrounding environment information of the vehicle, for example, static environment information and dynamic environment information that are around the vehicle.

The wheel speed sensor 135 is a sensor configured to detect a rotation speed of a wheel of the vehicle, and may obtain a wheel speed of the vehicle. A common wheel speed sensor 135 may include but is not limited to a magnetoelectric wheel speed sensor, a Hall wheel speed sensor, and/or the like.

The steering sensor 136, which may also be referred to as a steering angle sensor, may represent a system configured to detect a steering angle of the vehicle. In actual application, the steering sensor 136 may be configured to measure a steering angle of a steering wheel of the vehicle, or measure an electrical signal indicating the steering angle of the steering wheel of the vehicle. Optionally, the steering sensor 136 may be further configured to measure a steering angle of a vehicle tire, or measure an electrical signal indicating the steering angle of the vehicle tire, or the like.

The positioning system 137 is an apparatus configured to obtain location information, and may be configured to implement real-time positioning of the vehicle and provide geographical location information of the vehicle. The positioning system is, for example, a global positioning system (global positioning system, GPS) or a BeiDou positioning and navigation system.

The peripheral device 15 may include several elements, for example, a human-machine interaction (human-machine interaction, HMI) 151, a speaker 152, and a microphone 153 shown in the figure. The HMI is a device that is connected to an input and/or output device and that implements information exchange between a human and a machine, and includes but is not limited to a display (for example, a vehicle central control screen, a streaming media rearview mirror, an instrument panel, a head up display (head up display, HUD), a light field screen, or a projector), a touchscreen, or the like. In some solutions, a speaker, a microphone, and the like may also be considered as the HMI. The speaker 152, also referred to as a "loudspeaker", is configured to convert an audio electrical signal into a sound signal. Music is played or a hands-free call is answered in the vehicle through the speaker 152. The microphone 153, also referred to as a "mike" or a "mic", is configured to convert a sound signal into an electrical signal. When making a call or sending voice information, a user moves close to the microphone 153 to make a sound, and the microphone 153 may input a sound signal to the microphone.

The computing device 14 is a device having a computing capability and/or a control capability, and may include one or more processors. The processor may be configured to run a program or an instruction corresponding to the program, to implement a corresponding function (descriptions are provided below). For example, the computing device is a mobile data center (mobile data center, MDC) (or referred to as a self-driving domain controller), a domain controller (domain controller, DC), an electronic control unit (electronic control unit, ECU), or the like. The DC is, for example, a motion domain controller (motion domain controller, MDC) or a vehicle domain controller (vehicle domain controller, VDC). In some solutions, the computing device 14 may not be disposed in the vehicle, for example, disposed in a cloud, a roadside device, or a data center.

In a possible implementation, the computing device 14 may be combined with another element in the vehicle, for example, one or more of the powertrain system 11, the braking system 12, and the sensor system 13 in the sensor system 13, to implement a driving assistance function. For example, the computing device 14 may control the traveling speed of the vehicle 100 based on data collected by the sensor system 13.

In some solutions, the vehicle further includes a memory, configured to provide storage space. For example, the memory may include a volatile memory (volatile memory), for example, a RAM. For another example, the memory may alternatively include a non-volatile memory (non-volatile memory), for example, a read-only memory (read-only memory, ROM), a flash memory (flash memory), a hard disk drive (hard disk drive, HDD), or a solid state drive (solid state drive, SSD). The memory may alternatively include a combination of the foregoing types of memories. Optionally, the memory may further store information such as a road map, a driving route, and sensor data.

It should be noted that FIG. 1 is merely a diagram of a possible functional framework of the vehicle 100. In actual application, the vehicle 100 may include more or fewer systems or elements. This is not limited in the present invention. For example, the vehicle 100 may further include a power supply, a communication system, or the like.

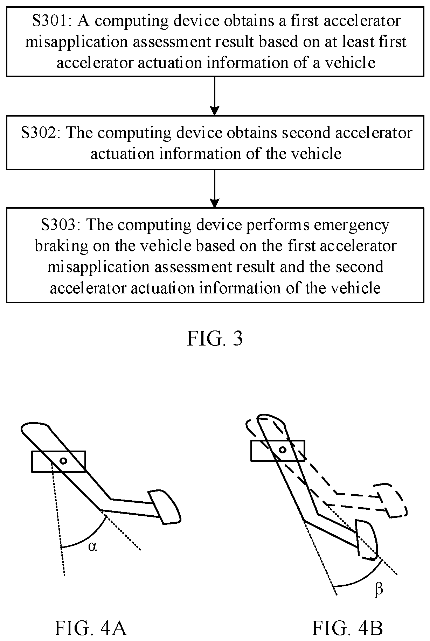

The following describes a method provided in embodiments of this application. FIG. 3 is a schematic flowchart of a driving assistance method according to an embodiment of this application. Optionally, the method is applied to the foregoing vehicle, for example, the vehicle 100 shown in FIG. 1 or FIG. 2. For example, the computing device 14 in the vehicle 100 performs the method. For ease of description, the following uses an example in which an execution body is a computing device for description.

The driving assistance method shown in FIG. 3 may include one or more steps in step S301 to step S303. It should be understood that, for ease of description, a sequence of S301 to S303 is used for description herein, but this is not intended to constitute a limitation that the method is necessarily performed in the foregoing sequence. An execution sequence, execution time, a quantity of execution times, and the like of the foregoing one or more steps are not limited in embodiments of this application. S301 to S303 are specifically as follows.

Step S301: The computing device obtains a first accelerator misapplication assessment result based on at least first accelerator actuation information of a vehicle.

Accelerator actuation information includes one or more pieces of the following information: a pedal opening, an actuation rate, actuation force intensity, or the like of an accelerator pedal. The pedal opening indicates a degree at which the accelerator pedal is spread. For example, the pedal opening is an angle at which the accelerator pedal is spread, or the pedal opening is a proportion of an angle at which the accelerator pedal is actuated to an angle at which the pedal is fully spread. The actuation rate indicates a rate at which the pedal opening changes.

FIG. 4A and FIG. 4B are diagrams of a pedal opening according to an embodiment of this application. As shown in FIG. 4A, an angle at which the accelerator pedal is fully actuated and spread is *α*. As shown in FIG. 4B, when a driver actuates the accelerator pedal, the pedal is spread. In FIG. 4B, a dashed line indicates a location of the accelerator pedal when the accelerator pedal is not subjected to a force, and a solid line indicates a current location of the pedal after the pedal is actuated. With reference to FIG. 4B, an angle at which the pedal is spread is represented as *β*. With reference to FIG. 4A and FIG. 4B, the pedal opening may be represented as *β* or $\frac{β}{α}$ (or $\frac{β}{α} \times 100 %$). In the foregoing example, the pedal opening is forwardly indicated, that is, a larger value indicates a larger degree at which the pedal is spread. However, in some solutions, the pedal opening may alternatively be reversely indicated, that is, a smaller value indicates a larger degree at which the pedal is spread. For example, the pedal opening may alternatively be indicated by using a difference between an angle at which the pedal is fully spread and an angle at which the pedal is currently spread, and is, for example, represented as *α* - *β* with reference to FIG. 4A and FIG. 4B. For another example, the pedal opening may be indicated by using a difference between 100% and a currently spread angle proportion, and is, for example, represented as $100 % - \frac{β}{α} \times 100 %$ with reference to FIG. 4 A and FIG. 4B. This application is applicable to both a case in which the pedal opening is forwardly indicated and a case in which the pedal opening is reversely indicated. For ease of description, in the following examples, unless otherwise specified, the pedal opening is forwardly indicated.

The actuation force intensity may be described by using an actuation force intensity level (or referred to as a force intensity level for short), and the actuation force intensity level indicate a degree of a weight with which the driver actuates the accelerator pedal. There may be one or more actuation force intensity levels. Two possible level designs are listed below as examples.

Design 1: There are three actuation force intensity levels, which are referred to as a first level, a second level, and a third level for distinguishing. When the pedal opening of the accelerator pedal falls within a first opening range and a rate at which the accelerator pedal is actuated falls within a first rate range, the accelerator actuation force intensity level is the first level. When the pedal opening of the accelerator pedal falls within a second opening range and the rate at which the accelerator pedal is actuated falls within a second rate range, the accelerator actuation force intensity level is the second level. In other cases, the accelerator actuation force intensity level is the third level.

With reference to the foregoing description, a manner of forwardly indicating the pedal opening is used as an example. A lower bound of the first opening range is greater than a lower bound of the second opening range, and a lower bound of the first rate range is greater than a lower bound of the second rate range. For example, the first level, the second level, and the third level are respectively "heavy actuation", "medium actuation", and "light actuation". For example, the pedal opening is a proportion of an angle at which the pedal is actuated to an angle at which the pedal is fully spread. If the pedal opening is greater than 90% and the actuation rate is greater than 60%/second, it is determined that such case is "heavy actuation"; or if the pedal opening is greater than 70% and the actuation rate is greater than 25%/second, it is determined that such case is "medium actuation". Cases other than "light actuation" and "heavy actuation" are "light actuation". Optionally, in a specific implementation, a boundary value may be optionally designed to belong to any range. For example, in some cases, the foregoing solution may alternatively be replaced with the following: If the pedal opening is greater than or equal to 90% and the actuation rate is greater than or equal to 60%/second, it is determined that such case is "heavy actuation"; or if the pedal opening is greater than or equal to 70% and the actuation rate is greater than or equal to 25%/second, it is determined that such case is "medium actuation".

Certainly, this application is also applicable to a case in which the pedal opening is reversely indicated. In this case, the lower bound of the first opening range is less than the lower bound of the second opening range, and the lower bound of the first rate range is greater than the lower bound of the second rate range. For example, if the pedal opening is less than 10% and the actuation rate is greater than 60%/second, it is determined that such case is "heavy actuation"; or if a pedal opening range is from 10% to 30% and the actuation rate is greater than 25%/second, it is determined that such case is "medium actuation". Cases other than "light actuation" and "heavy actuation" are "light actuation".

Design 2: There are two actuation force intensity levels, which are referred to as a first level and a second level for distinguishing. When the pedal opening of the accelerator pedal falls within a first opening range and a rate at which the accelerator pedal is actuated falls within a first rate range, the accelerator actuation force intensity level is the first level. In other cases, the accelerator actuation force intensity level is the second level.

For example, the first level and the second level are respectively "heavy actuation" and "light actuation". For example, the pedal opening is a proportion of an angle at which the pedal is actuated to an angle at which the pedal is fully spread. If the pedal opening is greater than 90% and the actuation rate is greater than 60%/second, it is determined that such case is "heavy actuation". Other cases are "light actuation". Similarly, this application is also applicable to a case in which the pedal opening is reversely indicated. For example, if the pedal opening is less than or equal to 10% and the actuation rate is greater than or equal to 60%/second, it is determined that such case is "heavy actuation". Other cases are "light actuation".

The first accelerator misapplication assessment result indicates that it is preliminarily determined whether a driver misapplies an accelerator. The determining herein is preliminary determining, and represents whether a suspected accelerator misapplication occurs. For example, the first accelerator misapplication assessment result may include a first parameter. When the first parameter has a first value, it indicates that it is preliminarily determined that the driver misapplies the accelerator. The first value may be one value, may be a plurality of values, or may be a data range. In some solutions, whether the driver misapplies the accelerator may trigger execution of different operations, which are described below.

The following describes several possible implementations of obtaining the first accelerator misapplication result.

Implementation 1: The computing device obtains the first accelerator misapplication assessment result based on the first accelerator actuation information of the vehicle.

In a possible implementation example, the first accelerator actuation information includes a pedal opening, and if the pedal opening is greater than a pedal opening threshold, it is preliminarily determined that a suspected accelerator misapplication occurs. The pedal opening threshold is usually a value greater than half of a maximum pedal opening, for example, 90% or 85%. It is usually not easy to actuate the accelerator deeply during accelerator actuation, and when a brake pedal is actuated, rapid actuation or deep actuation is likely to occur. Therefore, if the pedal opening is greater than the pedal opening threshold, it is preliminarily determined that the accelerator is suspected to be misapplied. The pedal opening threshold may be predefined, or may be obtained through calculation based on historical data of accelerator actuation information, driver information, and the like.

In another possible implementation example, the first accelerator actuation information includes an actuation rate and a pedal opening. If the actuation rate in a deep actuation direction is greater than a rate threshold and the pedal opening is greater than a pedal opening threshold, it is preliminarily determined that a suspected accelerator misapplication occurs. The accelerator is usually actuated slowly during accelerator actuation, and when a brake pedal is actuated, rapid actuation is likely to occur. Therefore, with reference to the actuation rate and the pedal opening, it can be preliminarily determined whether a suspected accelerator misapplication occurs. The rate threshold and the pedal opening threshold may be predefined, or may be obtained through calculation based on historical data of accelerator actuation information, driver information, and the like. For example, an accelerator pedal opening and an actuation rate in a daily driving process of the driver may be determined based on historical data of accelerator actuation information of the driver, and the pedal opening threshold and the actuation rate threshold may be determined based on the historical data, so as to more accurately identify a suspected accelerator misapplication.

Further, the computing device may determine, with reference to historical data of actuation information of the brake pedal (for example, an actuation rate and a pedal opening of the brake pedal) and the like, whether a rate and an opening at which the driver actuates the accelerator are similar to a habit of actuating a brake by the driver, to determine that a suspected accelerator misapplication occurs.

In another possible implementation example, the first accelerator actuation information includes an actuation rate and a pedal opening. When the pedal opening reaches a threshold and an actuation rate value in a direction of releasing the accelerator pedal reaches a preset value within preset time after the pedal opening reaches the threshold, it is preliminarily determined that a suspected accelerator misapplication occurs. Information such as the threshold, the preset time, and the change value may be predefined, or may be obtained through calculation based on historical data of accelerator actuation information, driver information, and the like. Certainly, the information may be partially predefined and partially obtained through calculation.

For example, the threshold is 90%, the preset time is one second (s), and the preset value is 60%/s. If the pedal opening reaches 90%, the vehicle is in a rapid acceleration state in this case. If the accelerator is misapplied, the driver may quickly release the accelerator pedal when being aware of rapid acceleration, and the driver does not release the accelerator pedal in normal rapid acceleration. Therefore, within 1s after the pedal opening reaches 90%, if the driver releases the pedal and an actuation rate in a pedal release direction reaches 60%/s, it is preliminarily determined that the driver misapplies the accelerator.

In some solutions, in addition to the first accelerator actuation information, the computing device may further perform preliminary determining of a misapplication with reference to other information, for example, perception information of the driver or driving environment data of the vehicle. The following continues to describe a possible implementation.

Implementation 2: The computing device obtains the first accelerator misapplication assessment result based on the first accelerator actuation information of the vehicle and the perception information of the driver of the vehicle. The perception information of the driver includes one or more of biometric feature information and voice information of the driver, assessment data obtained by processing the biometric feature information and/or the voice information, and the like. It may be understood that, when the driver misapplies a brake, the driver may be in a tense state or a panic state. Therefore, performing preliminary determining of a misapplication with reference to the perception information of the driver can improve accuracy of determining a misapplication.

In some possible implementations, the perception information of the driver of the vehicle includes a focus degree of the driver. In some solutions, the focus degree of the driver is indicated by using attention assessment data of the driver and tension degree assessment data of the driver. In some other solutions, the focus degree of the driver may be obtained through calculation based on the attention assessment data of the driver and the tension degree assessment data of the driver.

In some possible implementations, the attention assessment data includes a quantized attention degree value, and the quantized attention degree value is used to quantitatively assess an attention degree of the driver. Similarly, the tension degree assessment data includes a quantized tension degree value, and the quantized tension degree value is used to quantitatively assess a tension degree of the driver. Specifically, the computing device obtains the quantized attention degree value of the driver and the quantized tension degree value of the driver, and obtains the focus degree of the driver based on the quantized attention degree value and the quantized tension degree value of the driver. For example, the focus degree of the driver meets the following formula: $Drivingfocuslevel = \left(1-Attentionlevel\right) \times w 3 + Tensionlevel \times w 4$

Drivingfocuslevel is the focus degree of the driver, Attentionlevel is the quantized attention degree value, Tensionlevel is the quantized attention degree value, and w3 and w4 are weight values. Further, w3 and w4 meet w3+w4=1. For example, w3 is 0.65, and w2 is 0.45. For example, "×" is used to represent an operator, and may alternatively be replaced with "*" in some solutions.

In a possible implementation, a DMS and/or a CMS are/is deployed in the vehicle. The quantized attention degree value is provided by the DMS, and/or the quantized attention degree value is provided by the CMS. In another possible implementation, a vision sensor (including an image sensor), for example, an image sensor included in a DMS system, is deployed in the vehicle. The vision sensor is configured to collect visual information such as an expression of the driver and whether the driver is in a driver's seat. The visual information collected by the vision sensor may be provided to the computing device, and the computing device obtains the attention assessment data based on the visual information. In another possible implementation, a voice system is deployed in the vehicle. The vision sensor is configured to collect voice information of a cab. The voice information may be provided to the computing device, and the computing device obtains the tension degree assessment data based on the voice information.

With reference to the foregoing implementation example, an example of determining logic is as follows: If an accelerator actuation force intensity reaches a force intensity threshold and the focus degree of the driver is greater than a preset threshold, it is preliminarily determined that the driver misapplies the accelerator pedal. On the contrary, if the accelerator actuation force intensity does not reach the force intensity threshold or the focus degree of the driver is less than the preset threshold, it is preliminarily determined that the driver does not misapply the accelerator pedal.

Implementation 3: The computing device obtains the first accelerator misapplication assessment result based on the first accelerator actuation information of the vehicle and the driving environment data of the vehicle.

The driving environment information of the vehicle includes one or more of static environment information and dynamic environment information that are around the vehicle, a motion status of the ego vehicle (that is, the vehicle itself), or the like. Alternatively, the driving environment data of the vehicle includes assessment data obtained through calculation based on one or more pieces of the foregoing information such as the static environment information and the dynamic environment information that are around the vehicle, and the motion status of the vehicle itself. For example, the driving environment data of the vehicle includes one or more of collision risk information, a collision-free passage probability (collision-free passage probability, CFPP), a passage collision probability, estimated passage path information, or risk avoidance path information.

For example, the static environment information of the vehicle includes information about a static object. The static object is, for example, a road (such as a road boundary, a lane line, or a passage direction), an obstacle, or a traffic sign. The information about the static object includes information such as a location, a distance, a size, or a status of the static object. The dynamic environment information is, for example, a traffic flow, a congestion status, a traffic light status, and other information. The motion status of the vehicle includes one or more of a geographical location, a relative location, a traveling direction, an orientation, a steering direction of a steering wheel (or referred to as a direction of the steering wheel), a steering angle of the steering wheel, a speed of the vehicle, a wheel speed of the vehicle, an acceleration of the vehicle, a gear of the vehicle, a posture angle of the vehicle, a braking torque of the vehicle, or the like.

In some solutions, the driving environment data indicates a collision risk degree of the vehicle. It may be understood that, when a passage difficulty is relatively high or a collision risk is high, there is also a relatively high probability that the driver misapplies the brake, and performing preliminary determining of a misapplication with reference to the driving environment information of the vehicle can improve accuracy of determining a misapplication. In a possible solution, the computing device determines an estimated passage path of the vehicle based on the motion status of the vehicle, and may obtain a passable path of the vehicle based on surrounding environment information of the vehicle. The collision risk degree is related to a degree of consistency between the estimated passage path and the passable path of the vehicle. For example, if the steering direction of the steering wheel of the vehicle is consistent with the passable path, when a risk of collision between the vehicle and a surrounding environment and a traffic flow is estimated, a collision-free passage success rate of the vehicle is relatively high.

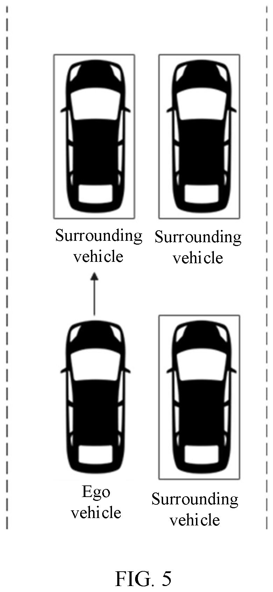

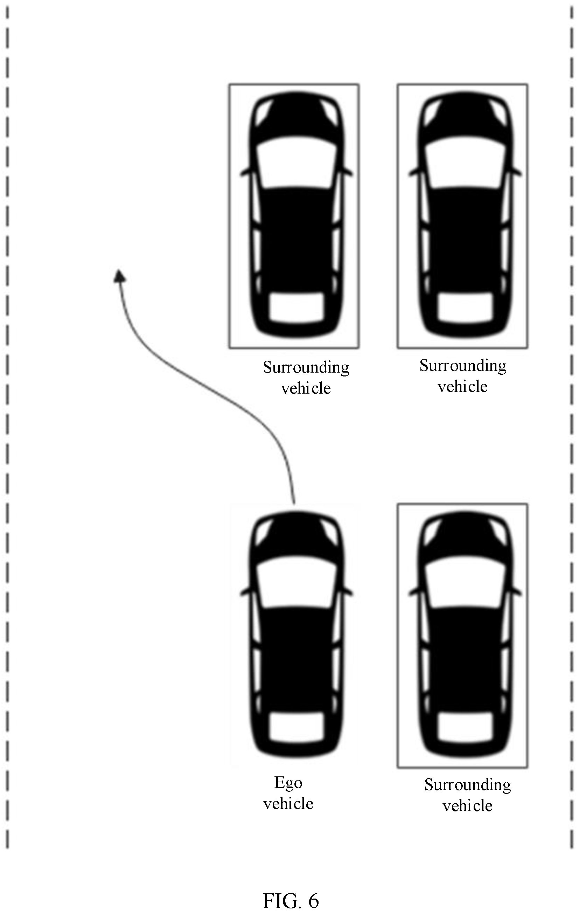

An example in which the driving environment data includes the CPFF is used as an example below for description. In a possible implementation, the computing device predicts a moving track (that is, the estimated passage path) of the ego vehicle based on obstacle information and road information that are around the ego vehicle and with reference to the steering direction of the steering wheel, the gear of the ego vehicle, and a kinematics model, assesses a risk of collision between the vehicle and a surrounding environment and a traffic flow, and calculates the CFPP of the ego vehicle. As shown in FIG. 5, when the ego vehicle is in a forward gear and cannot move forward or turn left or right, and the steering wheel indicates that a traveling direction of the vehicle is going straight or turning right, a collision-free passage success rate CFPP of the vehicle is 0%. As shown in FIG. 6, the steering direction of the steering wheel of the vehicle indicates that a traveling direction of the vehicle is turning left, which is consistent with a passage path. In this case, when a risk of collision between the vehicle and a surrounding environment and a traffic flow is estimated, a passage success rate of the vehicle is relatively high, and the CFPP is 70%. It may be understood that when passage success rate of the vehicle is relatively high (for example, the CFPP is relatively high), there is a relatively low probability that the driver misapplies the accelerator. On the contrary, when a passage difficulty of the vehicle is relatively high, a behavior of actuating the accelerator pedal by the driver may be a misapplication.

Implementation 4: The computing device obtains the first accelerator misapplication assessment result based on the first accelerator actuation information of the vehicle, the perception information of the driver of the vehicle, and the driving environment data of the vehicle. For detailed descriptions of the perception information of the driver and the driving environment data of the vehicle, refer to the foregoing descriptions.

In some possible implementations, the computing device determines a misapplication indicator based on the perception information of the driver of the vehicle and the driving environment data of the vehicle, determines first actuation force intensity based on the first accelerator actuation information, and determines the first accelerator misapplication assessment result based on the misapplication indicator and the first accelerator actuation force intensity. The misapplication indicator is determined based on the perception information of the driver of the vehicle and the driving environment data of the vehicle. Because reference is made to a collision risk degree and a response of the driver, the misapplication indicator can more accurately reflect a possibility that the driver misapplies the accelerator in cases of different collision risk degrees and different emotion feedbacks.

In some possible implementations, weights respectively corresponding to the perception information of the driver of the vehicle and the driving environment data of the vehicle are determined, so that availability of the misapplication indicator is higher. Optionally, a weight of the driving environment data of the vehicle is greater than a weight of the perception information of the driver of the vehicle. For example, the perception information of the driver includes a focus degree of the driver, the driving environment data of the vehicle includes a CFPP, and a WeightSum of the misapplication indicator meets the following formula: $WeightSum = \left(1-CFPP\right) \times w 1 + DrivingFocusLevel \times w 2$

DrivingFocusLevel indicates the focus degree of the driver, and w1 and w2 are weight values. Optionally, w1>w2. Further, w1 and w2 meet w1+w2=1. For example, w1 is 0.7, and w2 is 0.3. For example, "×" is used to represent an operator, and may alternatively be replaced with "*" in some solutions.

In a possible implementation example, for example, the first accelerator actuation information includes an actuation force intensity level, and the computing device may perform preliminary determining of a misapplication with reference to the actuation force intensity level and the misapplication indicator. For example, both of the following two cases are determined as accelerator misapplications: (1) The actuation force intensity level is "medium actuation", and the misapplication indicator is greater than a first indicator threshold. (2) The actuation force intensity level is "heavy actuation", and the actuation indicator is greater than a second indicator threshold. The first indicator threshold is greater than the second indicator threshold. For example, the first indicator threshold is 0.85, and the second indicator threshold is 0.75. Optionally, the first indicator threshold may be predefined or pre-obtained through calculation. Similarly, the second indicator threshold may be predefined or pre-obtained through calculation.

The foregoing plurality of implementations are merely examples. In a specific implementation process, more information may further participate in determining in the preliminary determining phase, and different implementations may be further combined. It may be understood that the foregoing information collection process or the determining process may be performed continuously. For example, the collected accelerator pedal information and voice information may be a segment of information obtained through continuous collection.

In some solutions, when the first accelerator misapplication assessment result indicates that the driver misapplies the accelerator, the computing device performs an anti-misapplication operation. The anti-anti-misapplication operation makes it easy for the driver to perceive occurrence of a misapplication, and it is more easily to trigger the driver to respond to an accelerator actuation event, thereby improving accuracy and determining efficiency of determining an accelerator misapplication. In some implementations, the anti-misapplication operation does not lock the accelerator pedal, and can support the driver in deeply actuating and releasing the accelerator pedal, so that the driver can have a higher degree of driving freedom. The following lists three possible anti-misapplication operations:

Operation 1: An accelerator rebound control signal is output, where the accelerator rebound control signal is used to control the accelerator pedal to give an accelerator pedal rebound force. Optionally, the accelerator rebound control signal may indicate a controller related to the accelerator pedal to apply a force to a direction of releasing the accelerator pedal. In some solutions, the accelerator rebound force is applied by an accelerator controller to the accelerator pedal, and the computing device may output the accelerator rebound signal to the accelerator controller, so that the accelerator controller applies the rebound force to the accelerator pedal. In some solutions, the computing device may be connected to another computing module, the computing module is connected to the accelerator controller, and the computing device may output the accelerator rebound signal to the computing module, so that the computing module controls the accelerator controller to apply the rebound force to the accelerator pedal. For example, the computing module may be a domain controller, an electronic control unit, or the like. Based on the accelerator pedal rebound force, the driver may perceive that the driver may misapply the accelerator, so that the driver performs a corresponding driving action, thereby improving driving safety of the driver.

Operation 2: Driving prompt information is output, where the driving prompt information is used to prompt the driver that there is an accelerator misapplication. Through the driving prompt information, the driver can perceive occurrence of a misapplication in a timely manner, thereby improving accuracy and determining efficiency of determining an accelerator misapplication.

Optionally, the driving prompt information may be transferred to the driver through a sound reminder, a light reminder, an electrical reminder, a tactile reminder (for example, vibration), or the like. For example, the computing device outputs the driving prompt information to an HMI-related product. In an example, on a user interface, a color, a text, a font weight, blinking, a graph, a dialog box, or the like may be used to prompt the driver that there is an accelerator misapplication. In another example, the driver may be prompted, by using a voice, that there is an accelerator misapplication.

Optionally, the driving prompt information may be presented in front of a field of view of the driver, so that the driver obtains the driving prompt information without lowering a head or turning a head. For example, a head up display, (head up display, HUD) is used to display or provide an alarm for a driving route, a collision risk, and a vehicle speed.

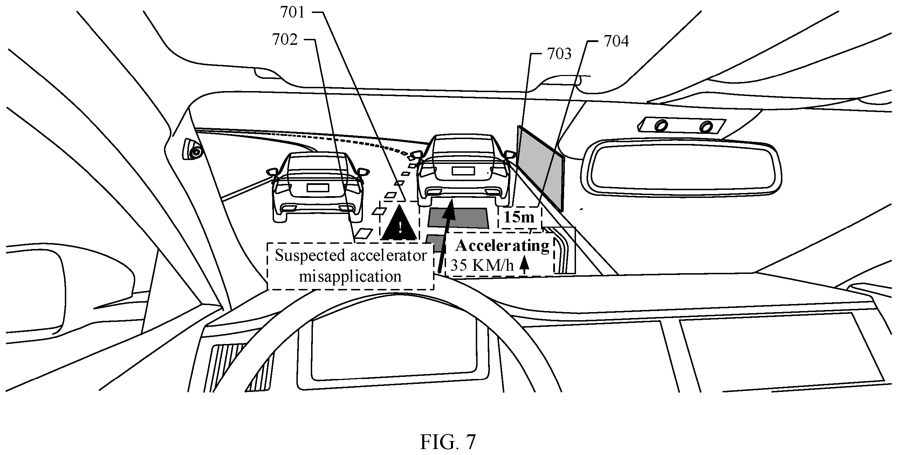

FIG. 7 is a diagram of a driving prompt according to an embodiment of this application. An HUD is deployed in the vehicle, and the HUD may project a display picture to present the driving prompt information. For example, a prompt graph may be presented by using the HUD, to prompt the driver that there is an accelerator misapplication. For example, a prompt symbol, an arrow (the arrow may be close to vehicle speed information, to prompt that the vehicle is in an acceleration state), a driving path, and the like in an area 701 and an area 704 shown by dashed lines can prompt the driver that there is an exception. Further, these prompt graphs may be presented with colors or warning colors (such as red, blue, and yellow) that are more easily sensed by human eyes, and/or the prompt image may be in a blinking state, so that the driver can more easily notice the prompt information. For another example, a text may be presented by using the HUD. For example, in an area 702, the driver is reminded in a text form that the driver is suspected to misapply the accelerator. For another example, in an area 703, the driver is prompted in a bold manner to pay attention to a distance from a vehicle ahead. In some cases, a faster change of a distance from a surrounding vehicle indicates that the vehicle may be in an acceleration state, so that the driver is aware of abnormal acceleration. Certainly, these problems can alternatively be made more noticeable to the driver through boldness, warning color setting, blinking, or font adding, or in another manner.

Operation 3: Driving prompt information is sent to user equipment, where the driving prompt information is used to prompt the driver that there is an accelerator misapplication. The user equipment herein includes one or more of a handheld device, a wearable device, an entertainment device, and the like. For example, when the driver views a mobile phone and operates the accelerator for acceleration based on a normal driving habit, the driver does not perceive a new environment element (for example, a fence or a warning sign used for construction), a temporarily occurred obstacle (for example, a vehicle that changes a lane, an animal that enters a road, or an obstacle that falls off), or the like. In this case, prompt information is sent to the user equipment, so that the driver can be prompted in a timely manner that there is an accelerator misapplication.

For example, the driving prompt information includes a result of determining an accelerator misapplication (whether the accelerator is misapplied), a status of the accelerator (for example, whether the accelerator is actuated, and actuation information), vehicle speed information (a speed, an acceleration, and the like), collision risk information, and the like. After receiving the driving prompt information, the user equipment may transfer the driving prompt information to the driver through a sound reminder, a light reminder, an electrical reminder, a tactile reminder (for example, vibration), or the like.

The foregoing three operations are examples of the anti-misapplication operation. In a specific implementation process, there may be another manner of prompting the driver that there is misapplication information. It should be understood that the plurality of anti-misapplication operations may be combined when they are not mutually exclusive. For example, the vehicle may simultaneously apply the accelerator rebound force and display the driving prompt information.

In some possible implementations, the method shown in FIG. 3 is performed when duration in which the accelerator pedal is continuously actuated exceeds second duration. For example, one or more steps in step S301 to step S303 are performed when the duration in which the accelerator pedal is continuously actuated exceeds the second duration. The second duration is predefined (for example, specified according to a protocol or pre-written), or the second duration is defined by a user, or the second duration may be obtained through calculation based on historical driving data of one or more drivers. For example, the second duration is, for example, 200 ms.

Step S302: The computing device obtains second accelerator actuation information of the vehicle.

When the driver indeed misapplies the accelerator, the vehicle usually accelerates rapidly. When the driver is aware that the vehicle accelerates abnormally or is aware that the driver has misapplied the accelerator, actuation force intensity applied by the driver to the accelerator is highly likely to change. Therefore, the computing device may re-obtain the accelerator actuation information, that is, the second accelerator actuation information.

For example, the second accelerator actuation information includes a second pedal opening and time information of the second pedal opening. For another example, the second accelerator actuation information includes a second pedal opening and a second actuation rate. For another example, the second accelerator actuation information includes second actuation force intensity.

In some solutions, the second accelerator actuation information is obtained after the first accelerator actuation information is obtained for a period of time.

In some possible implementations, when the computing device performs the anti-misapplication operation, time corresponding to the second accelerator actuation information may be after first duration in which the anti-misapplication operation is performed. In other words, obtaining the second accelerator actuation information of the vehicle includes: obtaining the second accelerator actuation information that is after the first duration in which the vehicle performs the anti-misapplication operation. The first duration is predefined duration, for example, 500 milliseconds (ms); and/or, the first duration is greater than human reflection time. However, the human reaction time is usually 0.2 second, and reaction time of some trained human drivers is usually greater than 0.1 second.

Step S303: The computing device performs emergency braking on the vehicle based on the first accelerator misapplication assessment result and the second accelerator actuation information of the vehicle.

Emergency braking can be replaced with braking, including comfort braking, rapid braking, or the like. Optionally, a deceleration in a braking process may be related to one or more of an environment in which the vehicle is located, a current vehicle speed, or the like. Optionally, emergency braking may be performed by using a braking system. The computing device may trigger, by outputting a control signal, the braking system of the vehicle to perform emergency braking on the vehicle.

In some possible implementations, an AEB system is deployed in the vehicle, a function of the AEB system is implemented by the computing device, and performing emergency braking on the vehicle includes: triggering the AEB function to perform emergency braking.

In some possible implementations, the computing device confirms, based on the first accelerator misapplication assessment result and the second accelerator actuation information of the vehicle, whether the driver misapplies the accelerator, and performs emergency braking on the vehicle when it is confirmed that the driver misapplies the accelerator. It should be noted that the first accelerator misapplication assessment result may not be directly used but indirectly used during confirmation. For example, the second accelerator actuation information is collected when the first accelerator misapplication assessment result indicates that it is preliminarily determined that the driver misapplies the accelerator. In this case, data directly used when it is confirmed whether the driver misapplies the accelerator is the second accelerator actuation information, and the second accelerator actuation information also implies that the first accelerator misapplication assessment result indicates that it is preliminarily determined that the driver misapplies the accelerator.

In some possible implementations, when it is confirmed whether the driver misapplies the accelerator, a misapplication confirmation result may be output, and the result indicates that it is confirmed whether the driver misapplies the accelerator. For example, the result is a value of a parameter. When the parameter has a first value, it indicates that it is confirmed that the driver misapplies the accelerator. When the parameter has a second value, it indicates that the driver does not misapply the accelerator. Certainly, the value of the parameter may be an intermediate value in misapplication confirmation and an emergency braking process, and is not explicitly indicated.

For ease of understanding, the following lists several emergency braking cases:

Case 1: When the first accelerator misapplication assessment result indicates that it is preliminarily determined that the driver misapplies the accelerator, and a difference between the first pedal opening and the second pedal opening is greater than or greater than or equal to a first threshold, it is confirmed that the driver misapplies the accelerator, and therefore the computing device performs emergency braking on the vehicle.

The difference between the first pedal opening and the second pedal opening may be a signed value, and a positive direction of the difference is a direction of releasing the accelerator pedal. In other words, when the first pedal opening is greater than the second pedal opening, the first pedal opening minus the second pedal opening is a positive number; or when the first pedal opening is less than the second pedal opening, the first pedal opening minus the second pedal opening is a negative number. It may be understood that this application is also applicable to a case in which a negative direction of the pedal difference is the direction of releasing the accelerator pedal. Alternatively, when the first accelerator misapplication assessment result indicates that it is preliminarily determined that the driver misapplies the accelerator, and the difference between the second pedal opening and the first pedal opening is less than or less than or equal to a threshold (for example, represented as a threshold TH1), it is confirmed that the driver misapplies the accelerator.

For example, the first threshold is, for example, $\frac{1}{10} , \frac{1}{5} , \frac{1}{4} , \frac{1}{3}$, or $\frac{1}{2}$ of a maximum range of the pedal opening. For example, when the pedal opening is represented by a percentage, the first threshold is, for example, 10%, 20%, 30%, 35%, 40%, or 50%.

Optionally, the first threshold may be predefined, or the first threshold may be a value set by default, or the first threshold may be obtained based on historical data of actuating the accelerator pedal by the driver, to meet personalized requirements of different drivers.

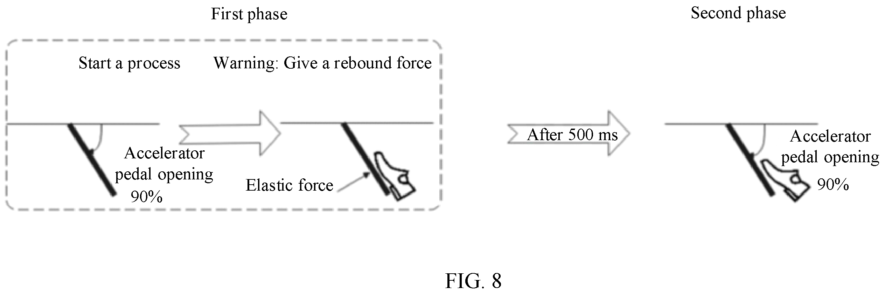

In some solutions, when the first accelerator misapplication assessment result indicates that it is preliminarily determined that the driver does not misapply the accelerator, or the difference between the first pedal opening and the second pedal opening is less than the first threshold, it is confirmed that the driver does not misapply the accelerator. FIG. 8 is a schematic flowchart of misapplication confirmation according to an embodiment of this application. A misapplication determining process is divided into a warning phase and a decision making phase. In the warning phase, the driver actuates the accelerator pedal, and the computing device obtains the first accelerator actuation information. In this case, an opening of the accelerator pedal is 90%. The computing device further preliminarily determines, based on the first accelerator actuation information, that the driver misapplies the accelerator pedal. The computing device outputs a control signal, so that the accelerator pedal is given a specific elastic force. The elastic force is usually less than a force applied by the driver to the pedal. After the first duration, for example, 500 ms, the computing device detects that the pedal opening of the accelerator is still 90%, indicating that the driver does not release the accelerator and applies a greater force to maintain the accelerator opening. Therefore, it is determined that the driver does not misapply the accelerator, and normal rapid acceleration is performed.

In some possible implementations, the second accelerator actuation information is collected when it is preliminarily determined that the driver misapplies the accelerator. In this case, the first accelerator misapplication result may be an implicit condition or a precondition. In other words, the foregoing Case 1 may alternatively be replaced with the following: If the difference between the first pedal opening and the second pedal opening is greater than or greater than or equal to the first threshold, it is confirmed that the driver misapplies the accelerator. In some solutions, if the difference between the first pedal opening and the second pedal opening is less than the first threshold, it is confirmed that the driver does not misapply the accelerator.

Case 2: When the first accelerator misapplication assessment result indicates that it is preliminarily determined that the driver misapplies the accelerator, and the second pedal opening is less than a second threshold, it is confirmed that the driver misapplies the accelerator. If the second pedal opening is less than the second threshold, it indicates that the driver greatly releases the accelerator subsequently, and therefore it is confirmed that an accelerator misapplication occurs. For example, the second threshold is, for example, $\frac{1}{10}$ or $\frac{1}{20}$ of a maximum range of the pedal opening. For example, when the pedal opening is represented by a percentage, the second threshold is, for example, 10% or 5%. Optionally, the second threshold may be predefined, or the second threshold may be a value set by default, or the second threshold may be obtained based on historical data of actuating the accelerator pedal by the driver, to meet personalized requirements of different drivers.

For example, the second threshold is 5%. When the first accelerator misapplication assessment result indicates that it is preliminarily determined that the driver misapplies the accelerator, but the second pedal opening collected after the accelerator is preliminarily misapplied is less than 5%, for example, 0, it is confirmed that an accelerator misapplication occurs.

Certainly, an example in which the pedal opening is forwardly indicated is used for description herein. This application is also applicable to a case in which the pedal opening is reversely indicated.

In some solutions, when the first accelerator misapplication assessment result indicates that it is preliminarily determined that the driver does not misapply the accelerator or the second pedal opening is greater than the second threshold, it is confirmed that the driver does not misapply the accelerator. After it is preliminarily determined that the driver does not misapply the accelerator, the driver does not greatly release the accelerator. Therefore, it is confirmed that the driver performs normal rapid acceleration and does not misapply the accelerator.

Optionally, the first accelerator misapplication result may be an implicit condition or a precondition, that is, when the second pedal opening is less than the second threshold, it is confirmed that the driver misapplies the accelerator. In some solutions, when the second pedal opening is greater than the second threshold, it is confirmed that the driver does not misapply the accelerator.

In some possible implementations, the computing device may perform emergency braking with reference to the perception information of the driver, the driving environment data of the vehicle, or the like. In other words, the computing device performs emergency braking on the vehicle based on the first accelerator misapplication assessment result, the second accelerator actuation information, the perception information of the driver, and/or the driving environment data of the vehicle.

In some solutions, the computing device may further obtain surrounding environment information of the vehicle and/or obtain collision risk information through calculation. In a case of the former, the computing device may determine a collision risk based on the surrounding environment information of the vehicle and the motion status of the vehicle. Further, an emergency braking operation may be triggered when there is a collision risk (for example, a collision risk degree is greater than a preset value).

In some possible implementations, the computing device performs emergency braking on the vehicle when the vehicle has a collision risk and it is confirmed that the driver misapplies the accelerator. In other words, emergency braking is triggered when the vehicle has a collision risk. In this way, a possibility of occurrence of a traffic accident is reduced, and triggering of emergency braking may be further avoided in a case of an open environment, a low passage difficulty, or a collision-free environment, to avoid excessive interference caused by automatic emergency braking to driving of a user, thereby ensuring driving freedom of human driving.

In some possible implementations, when it is confirmed that the driver does not misapply the accelerator, emergency braking on the vehicle is not triggered. For example, the vehicle may accelerate based on accelerator control, that is, the vehicle is in an acceleration state. For example, when an AEB function is deployed in the vehicle, the AEB function is in a suppressed state when it is confirmed that the driver does not misapply the accelerator.

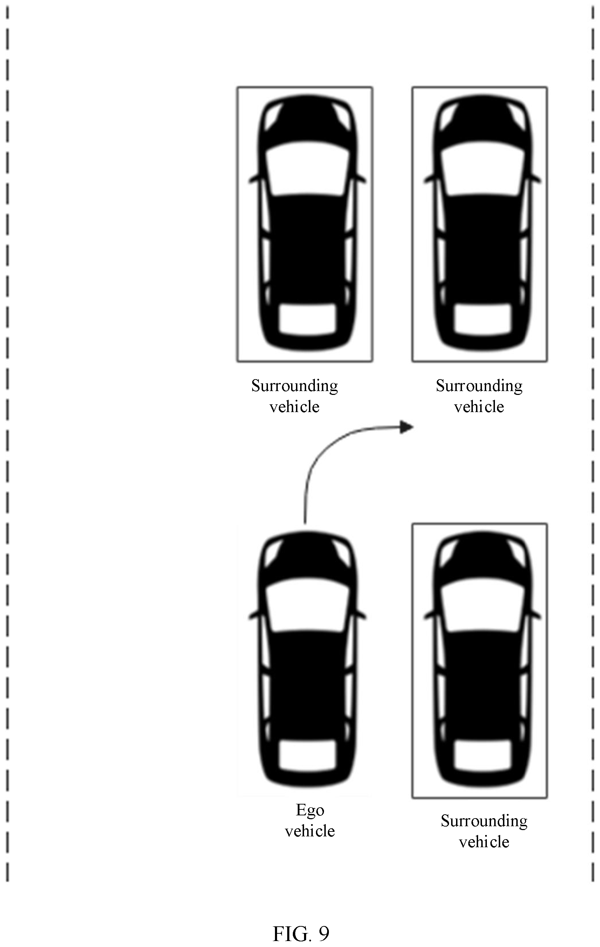

Referring to FIG. 9, in a scenario in which there is a passage path on the front left, but the steering direction of the steering wheel of the driver faces a right direction, when a risk of collision between the vehicle and a surrounding environment and a traffic flow is estimated, a passage success rate of the vehicle is relatively low, for example, a CFPP may be 0.2. During preliminary determining of a misapplication, the misapplication indicator is relatively large, and it is easily preliminarily determined that the accelerator is misapplied. In this case, the vehicle applies the rebound force to the accelerator pedal and/or gives a sound and image reminder to the driver by using an HMI. After the first duration, the computing device obtains second accelerator pedal information, and determines that a difference between a new pedal opening and a preliminary pedal during preliminary determining is less than or equal to the first threshold. In this case, it is considered that the driver performs normal rapid acceleration. For example, the driver may steer the steering wheel to the left next, and emergency braking is not triggered in this case.

In some possible implementations, when the vehicle has a collision risk and it is confirmed that the driver does not misapply the accelerator, emergency braking on the vehicle is not triggered. For example, the AEB function may be in the suppressed state.

The driving assistance method shown in FIG. 3 may be applied to a plurality of possible cases. In a scenario, a current gear of the vehicle is a forward gear, that is, a current traveling direction of the vehicle is a forward direction. For example, preliminary determining and confirmation of an anti-misapplication are performed in a scenario in which the vehicle is started, the vehicle moves forward, or the like, so as to perform braking when it is confirmed that a misapplication occurs, thereby reducing a probability of a traffic accident caused by an accelerator misapplication.

In another scenario, a current gear of the vehicle is a reverse gear, that is, a traveling direction of the vehicle is a backward direction. For example, in a scenario of shifting into the reverse gear from a parked state to start the vehicle, reversing the vehicle, or the like, the computing device performs preliminary determining and secondary confirmation of an anti-misapplication, so as to perform braking when it is confirmed that a misapplication occurs, thereby reducing a probability of a traffic accident caused by an accelerator misapplication.

In the embodiment shown in FIG. 3, determining of an accelerator misapplication is divided into two phases: preliminary determining and secondary confirmation. In the first phase, whether the driver misapplies the accelerator is preliminarily determined based on at least the first accelerator actuation information, and in the preliminary determining process, whether the driver is suspected to misapply the accelerator can be detected. Accelerator actuation information, that is, the second accelerator actuation information, may be re-obtained in the second phase. With reference to a preliminary assessment result (that is, the first accelerator misapplication assessment result) in the first phase and the second accelerator actuation information obtained in the second phase, it can be more accurately determined whether an accelerator misapplication occurs, to determine whether to perform emergency braking on the vehicle. In this way, through determining in the two phases, accuracy of determining a misapplication can be improved, and the vehicle can be braked in a timely manner when it is confirmed that a misapplication occurs, thereby reducing a probability of a traffic accident caused by an accelerator misapplication. However, when the driver performs normal rapid acceleration, even if it is preliminarily determined that a misapplication occurs, secondary confirmation of the misapplication is performed, so that a mis-determining rate can be reduced, thereby avoiding affecting a degree of driving freedom of the driver, and improving driving experience.

The foregoing describes a scenario to which embodiments of this application are applied and the method provided in this application. The following provides an apparatus in embodiments of this application. It may be understood that, to implement functions in the foregoing method embodiments, a plurality of apparatuses provided in embodiments of this application, for example, the driving assistance apparatus, the computing device, and the chip, include a corresponding hardware structure, software unit, or a combination of a hardware structure and a software structure for performing each function. A person skilled in the art should be easily aware that, in combination with a plurality of functions described in embodiments disclosed in this specification, the apparatus and modules in the apparatus may be implemented by hardware or a combination of hardware and computer software. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

The following lists several possible apparatuses.

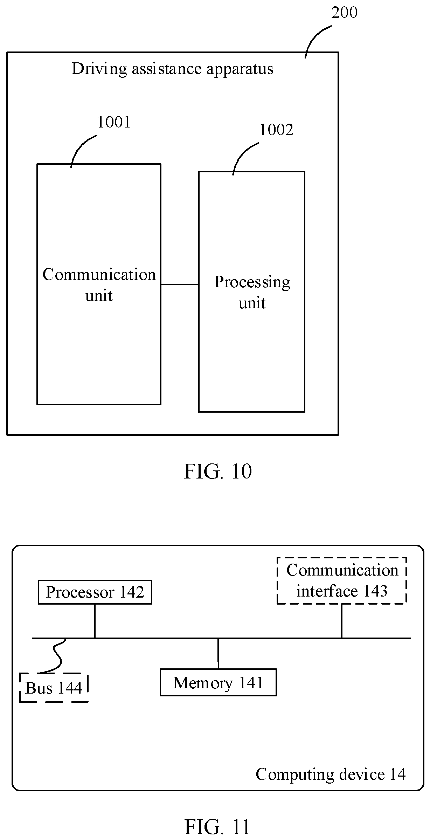

FIG. 10 is a diagram of a structure of a driving assistance apparatus according to an embodiment of this application. A driving assistance apparatus 200 may include a communication unit 1001 and a processing unit 1002. The driving assistance apparatus 200 may be an independent device, for example, the computing device 14 shown in FIG. 1; or the driving assistance apparatus 200 may be a software module and/or a hardware module in an independent device.

The driving assistance apparatus 200 is configured to implement the foregoing driving assistance method, for example, implement the driving assistance method in the embodiment shown in FIG. 3. The processing unit is configured to implement one or more of the foregoing operations such as information processing, data generation, determining, decision making, and determining. The communication unit is configured to implement one or more of operations such as obtaining, outputting, receiving, or sending.

In a possible implementation, the processing unit 1002 is configured to obtain a first accelerator misapplication assessment result based on at least first accelerator actuation information of a vehicle. The communication unit 1001 is configured to obtain second accelerator actuation information of the vehicle. The processing unit 1002 is further configured to perform emergency braking on the vehicle based on the first accelerator misapplication assessment result and the second accelerator actuation information of the vehicle. The first accelerator misapplication assessment result indicates that it is preliminarily determined whether a driver misapplies an accelerator.

In another possible implementation, the communication unit 1001 and the processing unit 1002 are further configured to perform an anti-misapplication operation when the first accelerator misapplication assessment result indicates that the driver misapplies the accelerator.

In another possible implementation, the communication unit 1001 is further configured to output an accelerator rebound control signal.

In another possible implementation, the communication unit 1001 is further configured to output driving prompt information.

In another possible implementation, the communication unit 1001 is further configured to send the driving prompt information to user equipment.

In another possible implementation, the processing unit 1002 is further configured to: confirm, based on the first accelerator misapplication assessment result and the second accelerator actuation information of the vehicle, whether the driver misapplies the accelerator, and perform emergency braking on the vehicle when it is confirmed that the driver misapplies the accelerator.

In another possible implementation, the processing unit 1002 is further configured to: when the first accelerator misapplication assessment result indicates that it is preliminarily determined that the driver misapplies the accelerator, and a difference between a first pedal opening and a second pedal opening is greater than or greater than or equal to a first threshold, confirm that the driver misapplies the accelerator. Further, the processing unit 1002 is configured to: when the first accelerator misapplication assessment result indicates that it is preliminarily determined that the driver does not misapply the accelerator, or the difference between the first pedal opening and the second pedal opening is less than the first threshold, confirm that the driver does not misapply the accelerator.

In another possible implementation, the processing unit 1002 is further configured to: when the first accelerator misapplication assessment result indicates that it is preliminarily determined that the driver misapplies the accelerator, and the second pedal opening is less than a second threshold, confirm that the driver misapplies the accelerator.

Further, the processing unit 1002 is further configured to: when the first accelerator misapplication assessment result indicates that it is preliminarily determined that the driver does not misapply the accelerator or the second pedal opening is greater than the second threshold, confirm that the driver does not misapply the accelerator.

In another possible implementation, the processing unit 1002 is further configured to perform emergency braking on the vehicle when the vehicle has a collision risk and it is confirmed that the driver misapplies the accelerator.

In another possible implementation, the processing unit 1002 is further configured to skip triggering emergency braking on the vehicle when it is confirmed that the driver does not misapply the accelerator.

In another possible implementation, the processing unit 1002 is further configured to perform emergency braking on the vehicle when the vehicle has a collision risk and it is confirmed that the driver does not misapply the accelerator.

In another possible implementation, a current gear of the vehicle is a forward gear.

In another possible implementation, a current gear of the vehicle is a reverse gear.

In another possible implementation, the processing unit 1002 is further configured to obtain the first accelerator misapplication assessment result based on at least one of the first accelerator actuation information of the vehicle, perception information of the driver of the vehicle, and driving environment data of the vehicle.

In another possible implementation, the processing unit 1002 is further configured to determine the driving environment data based on surrounding environment information of the vehicle and a motion status of the vehicle. Further, the communication unit 1001 is further configured to obtain attention assessment data of the driver and tension degree assessment data of the driver.

In another possible implementation, the communication unit 1001 is further configured to obtain face recognition information of the driver, obtain the attention assessment data based on the face recognition information of the driver, and obtain voice information of a cab of the vehicle. The processing unit 1002 is further configured to obtain the tension degree assessment data based on the voice information of the cab of the vehicle.

In another possible implementation, the processing unit 1002 is further configured to: determine a misapplication indicator based on the perception information of the driver of the vehicle and the driving environment data of the vehicle, determine first actuation force intensity based on the first accelerator actuation information, and determine the first accelerator misapplication assessment result based on the misapplication indicator and the first accelerator actuation force intensity.

In another possible implementation, the processing unit 1002 is further configured to perform emergency braking on the vehicle based on the first accelerator misapplication assessment result, the second accelerator actuation information, the perception information of the driver, and/or the driving environment data of the vehicle.

In another possible implementation, the processing unit 1002 is further configured to obtain the first accelerator misapplication assessment result based on at least the first accelerator actuation information of the vehicle when duration in which an accelerator pedal is continuously actuated exceeds second duration.

For a specific operation performed by the foregoing driving assistance, refer to the description in the embodiment shown in FIG. 3.

FIG. 11 is a diagram of a structure of a computing device according to an embodiment of this application. A computing device 14 is a device having a computing capability. The device herein may be a physical device, for example, a controller, a processor, a server (for example, a rack server), or a host, or may be a virtual device, for example, a virtual machine or a container. Optionally, the computing device 14 may be included in a vehicle, as shown in FIG. 1.

As shown in FIG. 11, the computing device 14 includes a processor 142 and a memory 141, and optionally includes a bus 144 and a communication interface 143. The processor 142 communicates with the memory 141 and the like through the bus 144. It should be understood that a quantity of processors and a quantity of memories in the computing device 14 are not limited in this application.

The memory 141 is configured to provide storage space. The storage space may optionally store application data, user data, an operating system, a computer program, and the like. The memory 141 may include a volatile memory (volatile memory), for example, a random access memory (random access memory, RAM). The memory 141 may alternatively include a non-volatile memory (non-volatile memory), for example, a read-only memory (read-only memory, ROM), a flash memory, a hard disk drive (hard disk drive, HDD), or a solid state drive (solid state drive, SSD).

The processor 142 is a module for performing an operation, and may include any one or more of a controller (for example, a storage controller), a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), an application-specific integrated circuit (Application-Specific Integrated Circuit, ASIC), a microcontroller unit (Microcontroller Unit, MCU), a virtual machine, a container, and the like.

The communication interface 143 is configured to provide an information input or output for at least one processor, and/or the communication interface 143 may be configured to receive data sent from the outside and/or send data to the outside. The communication interface 143 may be a wired link interface including, for example, an ethernet cable, or may be a wireless link (Wi-Fi, Bluetooth, universal wireless transmission, or another wireless communication technology) interface. Optionally, the communication interface 143 may further include a transmitter (for example, a radio frequency transmitter or an antenna), a receiver, or the like coupled to the interface.

The bus 144 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 144 may include a path for information transmission between components (for example, the memory 141, the processor 142, and the communication interface 143) of the computing device 14.

In this embodiment of this application, the memory 141 stores executable instructions, and the processor 142 executes the executable instructions to implement the foregoing driving assistance method, for example, the driving assistance method in the embodiment shown in FIG. 3. In other words, the memory 141 stores instructions used to perform the driving assistance method.

An embodiment of this application further provides a computing device cluster. The computing device cluster includes at least one computing device 14. Each computing device 14 includes a processor 142 and a memory 141. The processor 142 of the at least one computing device 14 is configured to execute instructions stored in the memory 141 of the at least one computing device 14, so that the computing device cluster implements the foregoing driving assistance method, for example, the driving assistance method in the embodiment shown in FIG. 3. Optionally, the memory stores instructions used to perform the driving assistance method.

An embodiment of this application further provides a chip, including a processor and a communication interface. The communication interface is configured to output and/or output data (including an instruction), and/or the communication interface is configured to receive and/or send data. When the processor executes program instructions in a memory, the foregoing driving assistance method, for example, the driving assistance method in the embodiment shown in FIG. 3, is implemented. For example, the communication interface is configured to input first accelerator actuation information and second accelerator actuation information, the processor is configured to preliminarily determine and confirm a misapplication, and the communication interface is further configured to output a control signal related to emergency braking. Further, the communication interface is further configured to output a control signal and/or prompt information related to an anti-misapplication operation, and the like.

An embodiment of this application provides a computer-readable storage medium. The computer-readable storage medium stores instructions. When the instructions are run on at least one processor, the foregoing driving assistance method, for example, the driving assistance method in the embodiment shown in FIG. 3, is implemented.

The computer-readable storage medium may be any usable medium accessible by a computing device, or a data storage device, such as a data center, including one or more usable media. The computer-readable storage medium may be a magnetic medium (for example, a floppy disk, a hard disk, or a magnetic tape), an optical medium (for example, a DVD), a semiconductor medium (for example, a solid state drive), or the like.

This application provides a computer program product. The computer program product includes computer instructions, and when the instructions are run on at least one processor, the foregoing driving assistance method, for example, the driving assistance method in the embodiment shown in FIG. 3, is implemented.

Optionally, the computer program product may be a software installation package or an image package. When the foregoing method needs to be used, the computer program product may be downloaded, and the computer program product is executed on the computing device.

This application provides a vehicle. The vehicle includes an accelerator and a braking system. The vehicle further includes the foregoing driving assistance apparatus 200, or the vehicle includes the foregoing computing device 14 or computing device cluster, or the vehicle includes the foregoing chip, or the vehicle includes the foregoing computer storage medium, or the foregoing computer program product is deployed in the vehicle.

For example, an architecture of the vehicle may be shown in FIG. 1. For example, the vehicle further includes one or more of a powertrain system 11, a sensor system 13, a peripheral device 15, a memory, or the like.

In embodiments of this application, the term "example", "for example", or the like is used to represent giving an example, an illustration, or a description. Any embodiment or design solution described as "example" or "for example" in this application should not be explained as being more preferred or having more advantages than another embodiment or design solution. Exactly, use of the word "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, "A and/or B" may indicate the following three cases: Only A exists, both A and B exist, and only B exists, where A and B may be singular or plural. The character "/" generally indicates an "or" relationship between the associated objects.

In addition, unless otherwise stated reversely, ordinal numbers such as "first" and "second" in embodiments of this application are intended to distinguish between a plurality of objects, but are not intended to limit an order, a time sequence, priorities, or importance of the plurality of objects.

## Claims

1. A driving assistance method, applied to a vehicle, wherein the method comprises:
obtaining a first accelerator misapplication assessment result based on at least first accelerator actuation information of the vehicle, wherein the first accelerator misapplication assessment result indicates that it is preliminarily determined whether a driver misapplies an accelerator;
obtaining second accelerator actuation information of the vehicle; and
performing emergency braking on the vehicle based on the first accelerator misapplication assessment result and the second accelerator actuation information of the vehicle.

2. The method according to claim 1, wherein before the obtaining the second accelerator actuation information of the vehicle, the method further comprises:
performing an anti-misapplication operation when the first accelerator misapplication assessment result indicates that it is preliminarily determined that the driver misapplies the accelerator.

3. The method according to claim 2, wherein the anti-misapplication operation comprises outputting an accelerator rebound control signal and/or outputting driving prompt information, wherein the accelerator rebound control signal is used to control an accelerator pedal to give a rebound force to the accelerator pedal, and the driving prompt information is used to prompt the driver that there is an accelerator misapplication.

4. The method according to claim 2 or 3, wherein the obtaining the second accelerator actuation information of the vehicle comprises:
obtaining the second accelerator actuation information that is after first duration in which the vehicle performs the anti-misapplication operation.

5. The method according to claim 4, wherein the first duration is predefined duration, and/or the first duration is greater than human reflection time.

6. The method according to any one of claims 1 to 5, wherein the performing emergency braking on the vehicle based on the first accelerator misapplication assessment result and the second accelerator actuation information of the vehicle comprises:
confirming, based on the first accelerator misapplication assessment result and the second accelerator actuation information of the vehicle, whether the driver misapplies the accelerator; and
performing emergency braking on the vehicle when it is confirmed that the driver misapplies the accelerator.

7. The method according to claim 6, wherein the first accelerator actuation information comprises a first pedal opening, and the second accelerator actuation information comprises a second pedal opening; and
the confirming, based on the first accelerator misapplication assessment result and the second accelerator actuation information of the vehicle, whether the driver misapplies the accelerator comprises:
when the first accelerator misapplication assessment result indicates that it is preliminarily determined that the driver misapplies the accelerator, and a difference between the first pedal opening and the second pedal opening is greater than or greater than or equal to a first threshold, confirming that the driver misapplies the accelerator.

8. The method according to claim 6, wherein the second accelerator actuation information comprises a second pedal opening, and the confirming, based on the first accelerator misapplication assessment result and the second accelerator actuation information of the vehicle, whether the driver misapplies the accelerator comprises:
when the first accelerator misapplication assessment result indicates that it is preliminarily determined that the driver misapplies the accelerator, and the second pedal opening is less than a second threshold, confirming that the driver misapplies the accelerator.

9. The method according to any one of claims 6 to 8, wherein the performing emergency braking on the vehicle when it is confirmed that the driver misapplies the accelerator comprises:
performing emergency braking on the vehicle when the vehicle has a collision risk and it is confirmed that the driver misapplies the accelerator.

10. The method according to any one of claims 1 to 9, wherein the obtaining the first accelerator misapplication assessment result based on at least the first accelerator actuation information of the vehicle comprises:
obtaining the first accelerator misapplication assessment result based on at least one of the first accelerator actuation information of the vehicle, perception information of the driver of the vehicle, and driving environment data of the vehicle, wherein the driving environment data indicates a collision risk degree of the vehicle.

11. The method according to claim 10, wherein the method further comprises:
determining the driving environment data based on surrounding environment information of the vehicle and a motion status of the vehicle.

12. The method according to claim 10 or 11, wherein the motion status of the vehicle indicates an estimated passage path of the vehicle, and the surrounding environment information of the vehicle is used to obtain a passable path of the vehicle; and
the collision risk degree is related to a degree of consistency between the estimated passage path and the passable path of the vehicle.

13. The method according to any one of claims 10 to 12, wherein the perception information of the driver of the vehicle comprises a focus degree of the driver; and
the method further comprises:
obtaining attention assessment data of the driver and tension degree assessment data of the driver; and
determining the focus degree of the driver based on the attention assessment data of the driver and the tension degree assessment data of the driver, wherein a weight of the attention assessment data is greater than a weight of the tension degree assessment data.

14. The method according to any one of claims 10 to 13, wherein the obtaining the first accelerator misapplication assessment result based on at least one of the first accelerator actuation information of the vehicle, the perception information of the driver of the vehicle, and the driving environment data of the vehicle comprises:
determining a misapplication indicator based on the perception information of the driver of the vehicle and the driving environment data of the vehicle;
determining first actuation force intensity based on the first accelerator actuation information; and
determining the first accelerator misapplication assessment result based on the misapplication indicator and the first accelerator actuation force intensity.

15. The method according to claim 14, wherein the first actuation force intensity is one of at least one actuation force intensity level, and the at least one actuation force intensity level indicates a degree of a weight with which the driver actuates the accelerator pedal.

16. The method according to any one of claims 1 to 15, wherein the obtaining the first accelerator misapplication assessment result based on at least the first accelerator actuation information of the vehicle comprises:
when duration in which the accelerator pedal is continuously actuated exceeds second duration, obtaining the first accelerator misapplication assessment result based on at least the first accelerator actuation information of the vehicle.

17. The method according to any one of claims 1 to 16, wherein a current gear of the vehicle is a reverse gear.

18. A driving assistance apparatus, wherein the driving assistance apparatus comprises a processing unit and a communication unit;
the processing unit is configured to obtain a first accelerator misapplication assessment result based on at least first accelerator actuation information of the vehicle, wherein the first accelerator misapplication assessment result indicates that it is preliminarily determined whether a driver misapplies an accelerator;
the communication unit is configured to obtain second accelerator actuation information of the vehicle; and
the processing unit is further configured to perform emergency braking on the vehicle based on the first accelerator misapplication assessment result and the second accelerator actuation information of the vehicle.

19. The apparatus according to claim 18, wherein the processing unit and the communication unit are further configured to perform an anti-misapplication operation when the first accelerator misapplication assessment result indicates that it is preliminarily determined that the driver misapplies the accelerator.

20. The apparatus according to claim 19, wherein the communication unit is further configured to output an accelerator rebound control signal, wherein the accelerator rebound control signal is used to control an accelerator pedal to give a rebound force to the accelerator pedal; and/or
the communication unit is further configured to output driving prompt information, wherein the driving prompt information is used to prompt the driver that there is an accelerator misapplication.

21. The apparatus according to claim 19 or 20, wherein the communication unit is further configured to:
obtain the second accelerator actuation information that is after first duration in which the vehicle performs the anti-misapplication operation.

22. The apparatus according to claim 21, wherein the first duration is predefined duration, and/or the first duration is greater than human reflection time.

23. The apparatus according to any one of claims 18 to 22, wherein the processing unit is further configured to:
confirm, based on the first accelerator misapplication assessment result and the second accelerator actuation information of the vehicle, whether the driver misapplies the accelerator; and
perform emergency braking on the vehicle when it is confirmed that the driver misapplies the accelerator.

24. The apparatus according to claim 23, wherein the first accelerator actuation information comprises a first pedal opening, and the second accelerator actuation information comprises a second pedal opening; and
the processing unit is further configured to:
when the first accelerator misapplication assessment result indicates that it is preliminarily determined that the driver misapplies the accelerator, and a difference between the first pedal opening and the second pedal opening is greater than or greater than or equal to a first threshold, confirm that the driver misapplies the accelerator.

25. The apparatus according to claim 23, wherein the second accelerator actuation information comprises a second pedal opening; and
the processing unit is further configured to:
when the first accelerator misapplication assessment result indicates that it is preliminarily determined that the driver misapplies the accelerator, and the second pedal opening is less than a second threshold, confirm that the driver misapplies the accelerator.

26. The apparatus according to any one of claims 23 to 25, wherein the processing unit is further configured to:
perform emergency braking on the vehicle when the vehicle has a collision risk and it is confirmed that the driver misapplies the accelerator.

27. The apparatus according to any one of claims 18 to 26, wherein the processing unit is further configured to:
obtain the first accelerator misapplication assessment result based on at least one of the first accelerator actuation information of the vehicle, perception information of the driver of the vehicle, and driving environment data of the vehicle, wherein the driving environment data indicates a collision risk degree of the vehicle.

28. The apparatus according to claim 27, wherein the processing unit is further configured to:
determine the driving environment data based on surrounding environment information of the vehicle and a motion status of the vehicle.

29. The apparatus according to claim 27 or 28, wherein the motion status of the vehicle indicates an estimated passage path of the vehicle, the surrounding environment information of the vehicle is used to obtain a passable path of the vehicle, and the collision risk degree is related to a degree of consistency between the estimated passage path and the passable path of the vehicle.

30. The apparatus according to any one of claims 27 to 29, wherein the perception information of the driver of the vehicle comprises a focus degree of the driver;
the communication unit is further configured to obtain attention assessment data of the driver and tension degree assessment data of the driver; and
the processing unit is further configured to determine the focus degree of the driver based on the attention assessment data of the driver and the tension degree assessment data of the driver, wherein a weight of the attention assessment data is greater than a weight of the tension degree assessment data.

31. The apparatus according to any one of claims 27 to 30, wherein the processing unit is further configured to:
determine a misapplication indicator based on the perception information of the driver of the vehicle and the driving environment data of the vehicle;
determine first actuation force intensity based on the first accelerator actuation information; and
determine the first accelerator misapplication assessment result based on the misapplication indicator and the first accelerator actuation force intensity.

32. The apparatus according to claim 31, wherein the first actuation force intensity is one of at least one actuation force intensity level, and the at least one actuation force intensity level indicates a degree of a weight with which the driver actuates the accelerator pedal.

33. The apparatus according to any one of claims 18 to 32, wherein the processing unit is further configured to:
when duration in which the accelerator pedal is continuously actuated exceeds second duration, obtain the first accelerator misapplication assessment result based on at least the first accelerator actuation information of the vehicle.

34. The apparatus according to any one of claims 18 to 33, wherein a current gear of the vehicle is a reverse gear.

35. A chip, comprising a processor and a communication interface, wherein
the communication interface is configured to output and/or output data, and/or the communication interface is configured to receive and/or send data; and
when a processor executes program instructions in a memory, the method described in any one of claims 1 to 17 is implemented.

36. A computing device, comprising a processor and a memory, wherein
the memory is configured to store program instructions, and when the processor executes the program instructions in the memory, the method described in any one of claims 1 to 17 is implemented.

37. A vehicle, wherein the vehicle comprises an accelerator and a braking system; and
the vehicle further comprises the driving assistance apparatus according to any one of claims 18 to 34;
the vehicle further comprises the chip according to claim 35; or
the vehicle further comprises the computing device according to claim 36.

38. A computer-readable storage medium, wherein the computer-readable storage medium stores program instructions, and when the program instructions are executed by a processor, the method according to any one of claims 1 to 17 is implemented.
